# EUROPEAN PATENT APPLICATION

(11) **EP 4 738 863 A1**
(43) Date of publication of application: **06.05.2026**
(21) Application number: 24880158.1
(22) Date of filing: 17.10.2024
(51) Int. Cl.: H04N 23/611, H04N 23/63, H04N 23/66, H04N 23/60, H04N 23/69, G06F 3/01

(54) **ELECTRONIC DEVICE AND PHOTOGRAPHING CONTROL METHOD THEREFOR**

(30) Priority: 20.10.2023 KR 20230141055
(71) Applicant: Samsung Electronics Co., Ltd., Suwon-si, Gyeonggi-do 16677 (KR)
(72) Inventor: KIM, Yunhui, Suwon-si Gyeonggi-do 16677 (KR); LEE, Seungjoon, Suwon-si Gyeonggi-do 16677 (KR)
(74) Representative: Gulde & Partner
(86) International application number: PCT/KR2024/015823
(87) International publication number: WO 2025/084821

(57) **Abstract**

A method for photographing by an electronic device, the method including: recognizing, as a target object, an object corresponding to a hand gesture among at least one object included in a first preview image; and displaying a photographing screen including the target object photographed based on a first viewing angle.

## Description

### [Technical Field]

This disclosure relates to an electronic device for guiding photographing and a method for controlling the same.

### [Background Art]

The development of the electronic industry makes it possible to use, through a single electronic device, the functions independently provided by multiple electronic devices, respectively. The smart phone is a representative electronic device. Such an electronic device may provide other additional functions as well as communication services such as voice call or content service use.

As electronic devices with various functionalities provide many functions, users may have more difficulty in using all of the functions. Therefore, many people may find it difficult to efficiently use the functions provided by the electronic device. For this reason, user interface methods (e.g., information exchange by gesture recognition) capable of intuitive communication with the user are being developed for electronic devices, but it may not be easy to efficiently utilize all the functions provided by the electronic device.

### [Disclosure]

### [Technical Solution]

Provided is a device and method for guiding a user to use an electronic device to based on the user's intention upon photographing.

Additional aspects will be set forth in part in the description which follows and, in part, will be apparent from the description, or may be learned by practice of the presented embodiments.

According to an aspect of the disclosure, a method for photographing by an electronic device, the method may include: recognizing, as a target object, an object corresponding to a hand gesture among at least one object included in a first preview image; and displaying a photographing screen including the target object photographed based on a first viewing angle.

The method may further include: outputting a first notification based on a position of the target object in a second preview image based on the first viewing angle; outputting a second notification based on the target object not being included in the second preview image; and alternatively performing locking and unlocking of the target object based on a selection in the second preview image, where the first notification is changed according to a movement of the first viewing angle.

The recognizing, as the target object, the object corresponding to the hand gesture may include: recognizing the target object based on at least one of a direction corresponding to the hand gesture, and a touch by the hand gesture.

The method may further include: obtaining a zoom-in request for a portion of the target object in based on the portion corresponding with an interaction of a user; and storing a result of analyzing an intention of the user based on the first viewing angle, corresponding to the photographing screen, where the target object is locked after photographing the target object.

The method may further include: processing a stepwise recognition setting for the target object based on an interaction with a user; and processing a release of the stepwise recognition setting for the target object based on a second interaction with the user.

The recognizing, as the target object, the object corresponding to the hand gesture may include: identifying an object of interest in the first preview image; outputting the object of interest that is identified; and recognizing the object of interest as the target object based on the hand gesture.

The method may further include: outputting at least one of a sound and a vibration based on a second object entering a second preview image based on the first viewing angle; and outputting at least one of a sound and a vibration based on the second object exiting the second preview image.

The method may further include: outputting a selection screen in which at least two options are provided based on at least one of an orientation of the electronic device and a screen display form based on an occurrence of an event requiring selection.

A plurality of objects among the at least one object included in the first preview image may be recognized as the target object based on the hand gesture.

According to an aspect of the disclosure, an electronic device may include: at least one sensor; a display; a memory including one or more storage media storing instructions; and at least one processor including one or more a processing circuits, where, by executing the instructions, the at least one processor is configured to: recognize, as a target object, an object corresponding to a hand gesture among at least one object included in a first preview image; and display a photographing screen including the target object photographed based on a first viewing angle.

By executing the instructions, the at least one processor may be further configured to: output a first notification based on a position of the target object in a second preview image based on the first viewing angle; output a second notification based on the target object not being included in the second preview image; and perform alternative locking and unlocking of the target object based on an event of selecting the second preview image, where the first notification is changed according to a movement of the first viewing angle.

By executing the instructions, the at least one processor may be further configured to: recognize the target object based on at least one of a direction corresponding to the hand gesture and a touch by the hand gesture.

By executing the instructions, the at least one processor may be further configured to: obtain a zoom-in request for a portion of the target object in based on the portion corresponding to an interaction with a user; generating a result of analyzing an intention of the user based on the first viewing angle, corresponding to the photographing screen, where the target object is locked after photographing the target object.

By executing the instructions, the at least one processor may be further configured to: process a stepwise recognition setting for the target object based on an interaction with a user; and process collective release of the stepwise recognition setting for the target object based on a second interaction with the user.

By executing the instructions, the at least one processor may be further configured to: set a plurality of objects among the at least one object included in the first preview image as the target object based on the hand gesture; identify an object of interest in the first preview image; output the object of interest that is identified; and recognize the object of interest as the target object based on the hand gesture.

By executing the instructions, the at least one processor may be further configured to: output at least one of a sound and a vibration based on a second object entering a second preview image based on the first viewing angle; and output at least one of a sound and a vibration based on the second object exiting the second preview image.

### [DESCRIPTION OF DRAWINGS]

The above and other aspects, features, and advantages of certain embodiments of the disclosure will be more apparent from the following description taken in conjunction with the accompanying drawings, in which:
FIG. 1 is a block view illustrating an exemplary electronic device 100 capable of performing operations according to an embodiment of the disclosure;
FIG. 2 is a view illustrating a state transition for photographing in an electronic device according to an embodiment of the disclosure;
FIG. 3 is a view illustrating a state transition for guiding a user to photograph in an electronic device according to an embodiment of the disclosure;
FIGS. 4A to 4C are views illustrating an example of an interaction for selecting a target object to be locked for photographing in an electronic device according to an embodiment of the disclosure;
FIGS. 5A to 5G are views illustrating an example of an interaction for locking and unlocking a target object for photographing in an electronic device according to an embodiment of the disclosure;
FIG. 6 is a view illustrating an implementation example of cluster lock in an electronic device according to an embodiment;
FIG. 7A and FIG. 7B are views illustrating an example of locking an object that may not be locked by a direct touch of a user in an electronic device according to an embodiment of the disclosure;
FIG. 8 is a view illustrating an example of locking when it is difficult to specify a target touched directly by a user in an electronic device according to an embodiment of the disclosure;
FIG. 9 is a view illustrating an example of locking when it is difficult to specify a target touched directly by a user in an electronic device according to an embodiment of the disclosure;
FIG. 10 is a view illustrating an example in which an electronic device guides to a position of a target object in a locked state within a viewing angle according to an embodiment of the disclosure;
FIG. 11A and FIG. 11B are views illustrating an example of focusing a target object in an electronic device according to an embodiment of the disclosure;
FIG. 12A, FIG. 12B, and FIG. 12C are views illustrating an example for leading to adjustment of a photographing distance in an electronic device according to an embodiment of the disclosure;
FIG. 13A and FIG. 13B are views illustrating an example of identifying a target object included in a viewing angle in an electronic device according to an embodiment of the disclosure;
FIG. 14A and FIG. 14B are views illustrating an example of guiding to an image quality of a target object in an electronic device according to an embodiment of the disclosure;
FIGS. 15A to 15D are views illustrating an example of a process leading to photographing based on data stored in an electronic device according to an embodiment of the disclosure;
FIG. 16A, FIG. 16B, and FIG. 16C are views illustrating an example of indicating that a disturb event occurs during photographing in an electronic device according to an embodiment of the disclosure;
FIGS. 17A to 17D are views illustrating an example of performing photographing by a request of a subject in an electronic device according to an embodiment of the disclosure;
FIG. 18A and FIG. 18B are views illustrating an example of communication with a user in an electronic device according to an embodiment of the disclosure;
FIG. 19A and FIG. 19B are views illustrating an example of controlling a photographing function by a user in an electronic device according to an embodiment of the disclosure; and
FIG. 20 is a block diagram illustrating an example of an electronic device according to an embodiment of the disclosure.
FIG. 21 is a flowchart illustrating a control process performed in an electronic device (e.g., electronic device 100 of Fig. 1) according to an embodiment of the disclosure.

The same or similar reference denotations may be used to refer to the same or similar elements throughout the specification and the drawings.

### [MODE FOR INVENTION]

Hereinafter, example embodiments of the disclosure will be described in detail with reference to the accompanying drawings. The same reference numerals are used for the same components in the drawings, and redundant descriptions thereof will be omitted. The embodiments described herein are example embodiments, and thus, the disclosure is not limited thereto and may be realized in various other forms. It is to be understood that singular forms include plural referents unless the context clearly dictates otherwise. The terms including technical or scientific terms used in the disclosure may have the same meanings as generally understood by those skilled in the art.

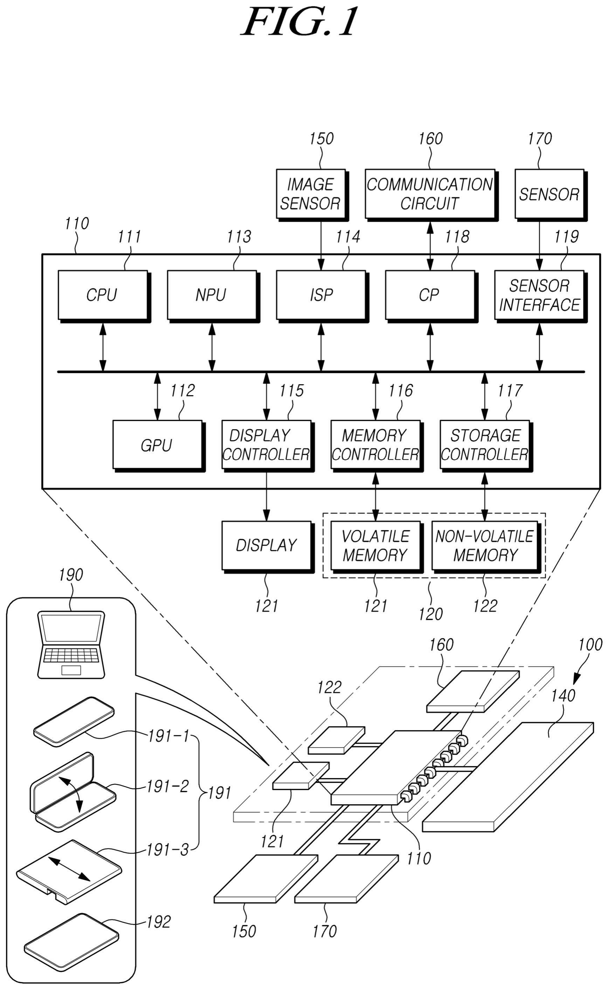

FIG. 1 is a block view illustrating an exemplary electronic device 100 capable of performing operations described in the disclosure.

Referring to FIG. 1, an electronic device 100 may be one of various types of electronic devices, such as a laptop computer 190, smartphones 191 having various form factors (e.g., a bar-type smartphone 191-1, a foldable-type smartphone 191-2, or a slidable (or rollable) smartphone 191-3), a tablet 192, a cellular phone, and other similar computing devices. The components illustrated in FIG. 1, and their relationships and functions are merely exemplary and do not limit implementations described or claimed in the disclosure. The electronic device 100 may be referred to as a mobile device, a user device, a multifunctional device, a portable device, or a server.

The electronic device 100 may include components including a processor 110, memory 120 (e.g., the volatile memory 121 and/or the non-volatile memory 122), a display 140, an image sensor 150, a communication circuit 160, and/or a sensor 170. The above components are merely exemplary. For example, the electronic device 100 may include other components (e.g., a power management integrated circuit (PMIC), an audio processing circuit, an antenna module, a rechargeable battery, or an input/output interface). For example, some components may be omitted from the electronic device 100. For example, some components may be integrated into one component.

The processor 110 may be implemented as one or more integrated circuit (IC) chips and may perform various data processing. For example, the processor 110 (or an application processor (AP)) may be implemented as a system on chip (SoC) (e.g., one chip or chipset). The processor 110 may include sub components including a central processing unit (CPU) 111, a graphics processing unit (GPU) 112, a neural processing unit (NPU) 113, an image signal processor (ISP) 114, a display controller 115, a memory controller 116, a storage controller 117, a communication processor (CP) 118, and/or a sensor interface 119. The above-described sub components are merely exemplary. For example, processor 110 may further include other sub components. For example, some sub components may be omitted from the processor 110. For example, some sub components may be included as separate components of the electronic device 100 outside the processor 110. For example, some sub components may be included in other components (e.g., the display 140 and the image sensor 150).

The processor 110 (e.g., the CPU 111 or the central processing circuit) may be configured to control sub components based on execution of instructions stored in the memory 120 (e.g., the volatile memory 121 and/or the non-volatile memory 122). The GPU 112 (or the graphics processing circuit) may be configured to execute parallel computations (e.g., rendering). The NPU 113 (or neural processing circuit) may be configured to execute operations (e.g., convolution computations) for an artificial intelligence model. The ISP 114 (or the image signal processing circuit) may be configured to process a raw image obtained through the image sensor 150 into a format suitable for a component in the electronic device 100 or a sub component in the processor 110. The display controller 115 (or the display control circuit) may be configured to process an image obtained from the CPU 111, the GPU 112, the ISP 114, or the memory 120 (e.g., the volatile memory 121) into a format suitable for the display 140. The memory controller 116 (or the memory control circuit) may be configured to control to read data from the volatile memory 121 and write the data to the volatile memory 121. The storage controller 117 (or the storage control circuit) may be configured to read data from the non-volatile memory 122 and control to write the data to the non-volatile memory 122. The CP 118 (communication processing circuit) may be configured to process data obtained from a sub component in the processor 110 into a format suitable for transmitting the data to another electronic device through the communication circuit 160, or to process data obtained from the other electronic device through the communication circuit 160 into a format suitable for processing by the sub component. The sensor interface 119 (or a sensing data processing circuit or a sensor hub) may be configured to process data about the status of the electronic device 100 and/or the status of the surroundings of the electronic device 100, which is obtained through the sensor 170, into a format suitable for a sub component in the processor 110.

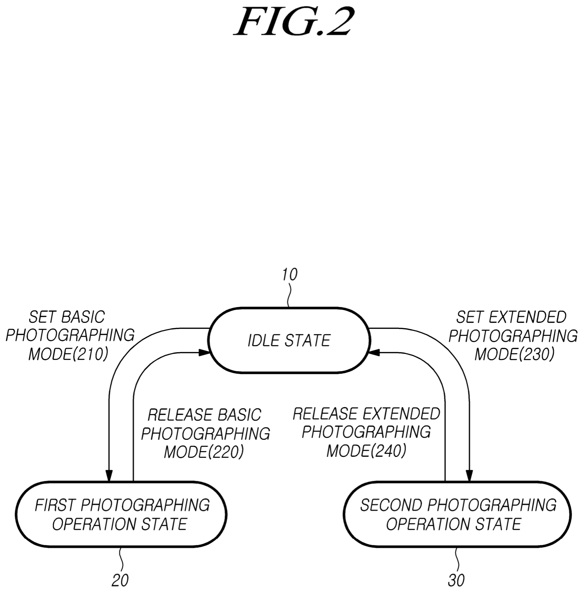

FIG. 2 is a view illustrating a state transition for photographing in an electronic device (e.g., the electronic device 100) according to an embodiment of the disclosure.

Referring to FIG. 2, the electronic device 100 may include an idle state 10, a first photographing operation state 20, or a second photographing operation state 30 as an operation state for photographing. The idle state 10 may be an operation state before the camera function is activated in the electronic device 100. The electronic device 100 may activate a camera function in response to the occurrence of an event in which the user attempts to photograph. The event of attempting to photograph may occur, e.g., by manipulating a touch button or a physical button for activating the photographing function of camera by the user.

The electronic device 100 may perform a photographing operation according to one of the first photographing operation state 20 or the second photographing operation state 30 in response to activation of the camera function.

The electronic device 100 may transition the state from the idle state 10 to the first photographing operation state 20 in response to the default photographing mode being set by the user (operation 210). The first photographing operation state 20 may be an operation state in which the user may perform photographing. For example, in the first photographing operation state 20, the user may set a desired composition and photographing environment through the screen of the electronic device 100, and may perform photographing based on thereto. The electronic device 100 may transition the state from the first photographing operation state 20 to the idle state 10 in response to the release of the basic photographing mode by the user (operation 220).

The electronic device 100 may transition the state from the idle state 10 to the second photographing operation state 30 in response to an extended photographing mode being set by the user (operation 230). The second photographing operation state 30 may be an operation state in which the user may perform photographing with the help of the electronic device 100. For example, in the second photographing operation state 30, the user may set at least one target object to be photographed by the user, may be guided by the electronic device 100 with respect to the set target object to set a desired composition and photographing environment, and may perform photographing based thereto. The electronic device 100 may transition the state from the second photographing operation state 30 to the idle state 10 in response to the release of the extended photographing mode by the user (operation 240).

According to an embodiment, the electronic device 100 may recognize an object indicated by a hand gesture of the user among at least one object included in a first preview image as the target object to be included in the photographing screen. The electronic device 100 may output an identification alarm corresponding to the placement of the target object in a second preview image reflecting the movement of the viewing angle. The electronic device 100 may change the identification alarm in response to the placement of the target object in a third preview image reflecting the movement of the viewing angle corresponding to the identification alarm. The electronic device 100 may perform photographing to obtain the photographing screen in response to the user's request.

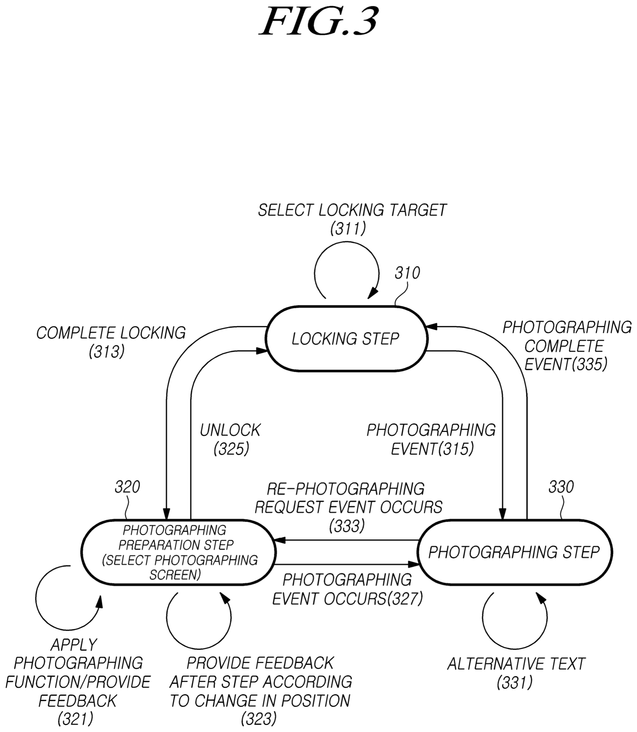

FIG. 3 is a view illustrating a state transition for guiding a user to photograph in an electronic device (e.g., the electronic device 100 of FIG. 1) according to an embodiment of the disclosure.

Referring to FIG. 3, operation steps for the electronic device 100 to guide the user to photograph may include a lock setting step 310, a photographing preparation step 320, or a photographing step 330.

The lock setting step 310 may be an operation step 311 in which the electronic device 100 selects at least one target object to be photographed by the user and locks the selected at least one target object. When the locking for the at least one target object is completed by the user, the electronic device 100 may transition to the photographing preparation step 320. When a photographing event occurs by the user (operation 327), the electronic device 100 may transition the state from the photographing preparation step 320 to the photographing step 330.

The photographing preparation step 320 may be an operation step in which the electronic device 100 adjusts or applies a setting for a photographing function (e.g., a zoom function, an illuminance adjustment function, or a photo composition) based on the feedback 321 to the user with respect to the at least one locked target object. In the photographing preparation step 320, the electronic device 100 may perform an operation 323 of feeding back the position of the at least one locked target object within the viewing angle to the user. In the photographing preparation step 320, the user may unlock the at least one target object in the locked state (325). When the all the target objects in the locked state are unlocked (325) by the user, the electronic device 100 may transition to the lock setting step 310.

When the photographing function to be applied and/or the setting of the position of the at least one target object in the locked state is completed, the electronic device 100 may transition the state from the photographing preparation step 320 to the photographing step 330.

In the photographing step 330, the electronic device 100 may take a photo reflecting the previously applied photographing function and/or the set position of the target object in response to the user's request. When the re-photographing event occurs by the user, the electronic device 100 may transition the state from the photographing step 330 to the photographing preparation step 320 (operation 333). When a photographing completion event by the user occurs in the photographing step 330, the electronic device 100 may switch the state from the photographing step 330 to the lock setting step 310 in response to the photographing completion event 335.

When photographing is performed according to the user's intention in the photographing step 330, the electronic device 100 may generate an alternative text (alt text) associated with the corresponding photo based on a record reflecting the user's intention (331).

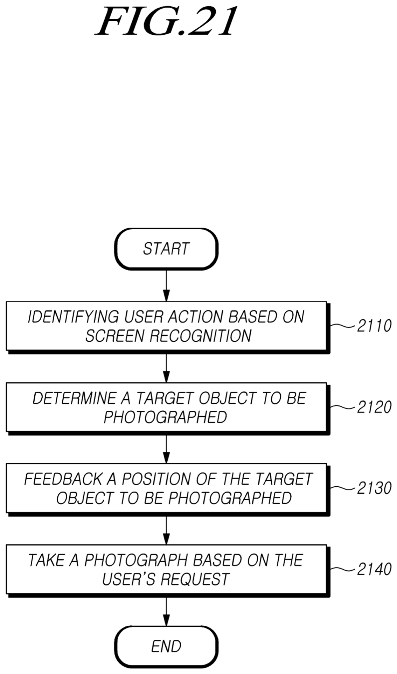

FIG. 21 is a flowchart illustrating a control process performed in an electronic device (e.g., electronic device 100 of Fig. 1) according to an embodiment of the disclosure.

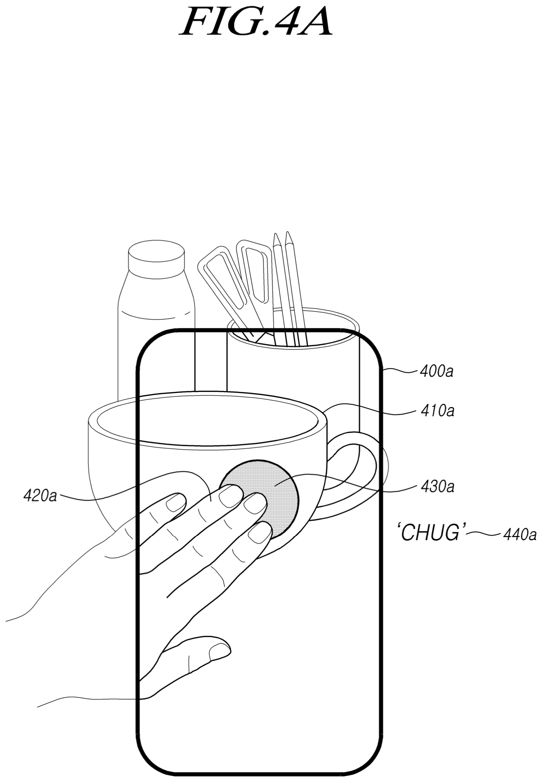

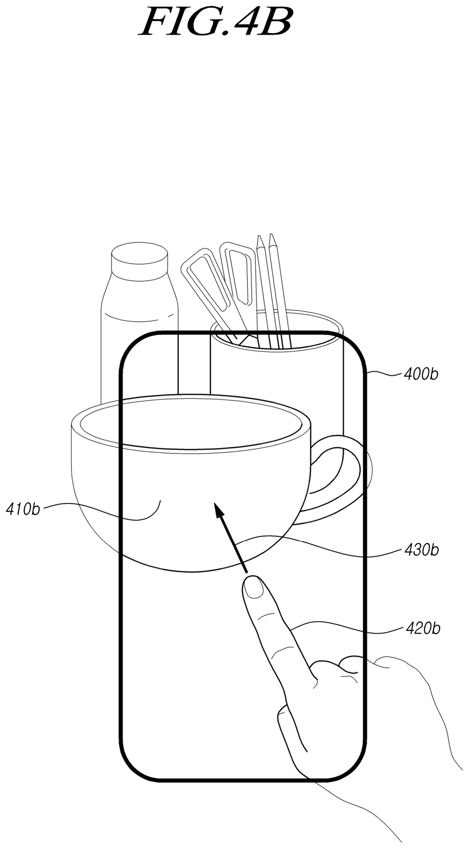

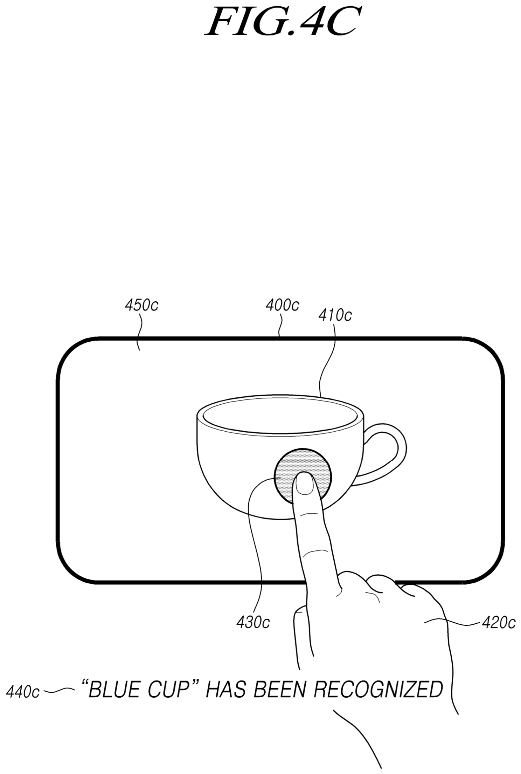

Referring to Fig. 21, in operation 2110, the electronic device 100 may identify a user action based on the screen recognition. In one example, the electronic device 100 may identify an action taken by a user in a first preview image output via the display. The electronic device 100 may identify a user action of selecting one of the at least one objects included in the first preview image. For example, the electronic device 100 may identify an action of the user touching a specific object with a hand in the first preview image (e.g., FIG. 4A). For example, the electronic device 100 may identify an action of a user indicating a specific object with a finger in the first preview image (e.g., FIG. 4b). For example, the electronic device 100 may identify an action of a user touching a specific object with a finger in the first preview image (e.g., FIG. 4C).

In operation 2120, the electronic device 100 may determine an target object to be photographed. In one example, the electronic device 100 may recognize one object included in the first preview image as the target object to be photographed based on the identified user action. For example, an object (e.g., a cup) that is touched or indicated to by the user with a hand or finger in the first preview image may be recognized as the target object to be photographed (e.g., FIG. 4A, FIG. 4B, or FIG. 4C).

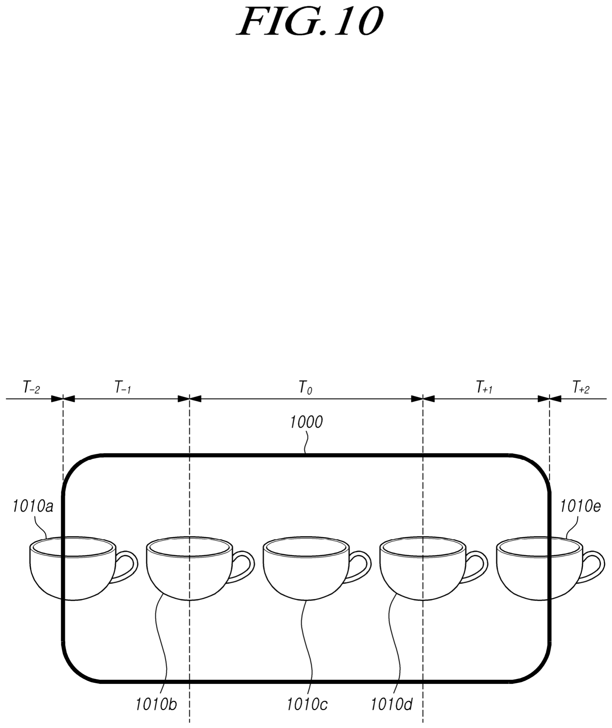

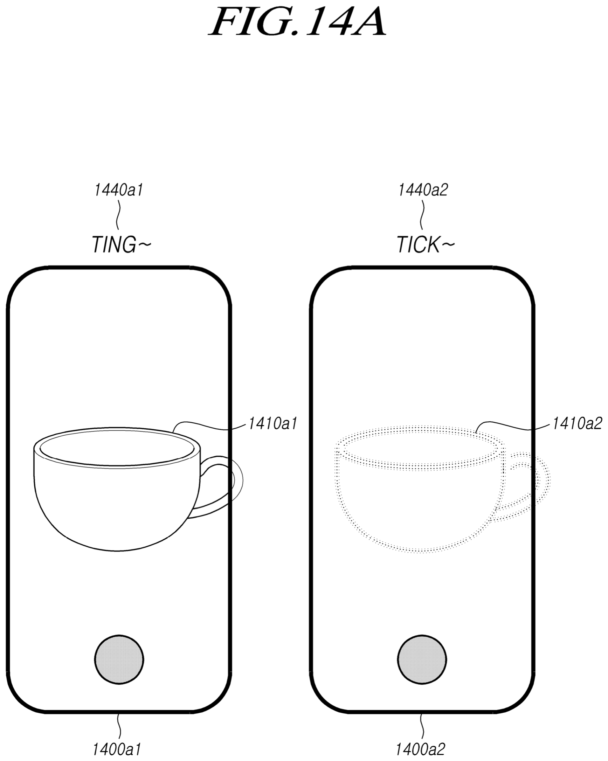

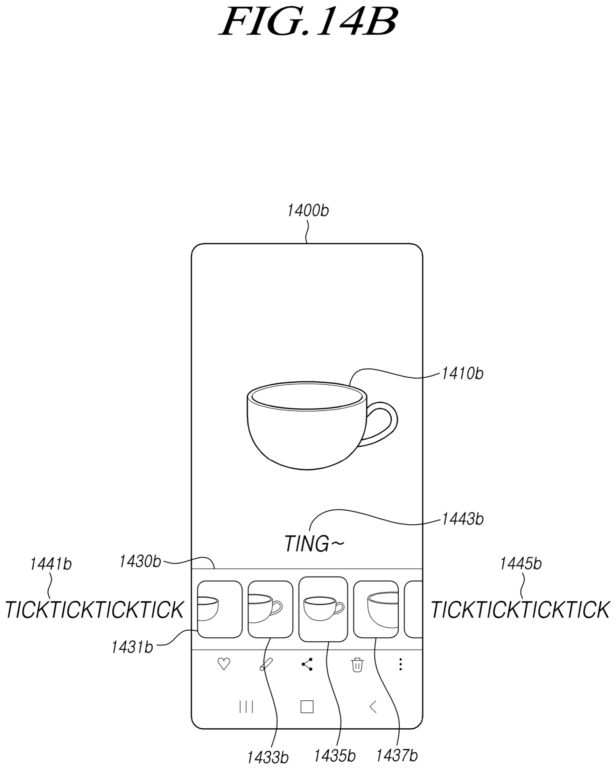

The electronic device 100 may, in operation 2130, feed back to the user the position of the target object to be photographed within a viewing angle (e.g., FIG. 10). In one example, the electronic device 100 may feed back to the user a position of a target object to be photographed within a second preview image based on a viewing angle in response to the user's operation (e.g., FIG. 14A or FIG. 14B). For example, the electronic device 100 may use an audible signal (e.g., voice, sound) or vibration to feed back the position of the target object to be photographed to the user. For example, the electronic device 100 may generate different audio signal and/or vibration respectively as the target object to be photographed moves toward the center of the second preview image than as the target object to be photographed moves away from the center of the second preview image. For example, the electronic device 100 may generate a different audio signal or vibration when the target object to be photographed is in the viewing angle of the second preview image than when the target object to be photographed is out of the viewing angle.

In operation 2140, the electronic device 100 may take a photograph based on the user's request to take a photograph. In one example, the electronic device 100 may obtain an image based on the user's request to take the image, and generate an alt text based on the obtained image.

FIGS. 4A to 4C are views illustrating an example of an interaction for selecting a target object to be locked for photographing in an electronic device (e.g., the electronic device 100 of FIG. 1) according to an embodiment of the disclosure.

Referring to FIG. 4A, the electronic device 100 may recognize that the user touches (430a) a specific object (e.g., a cup) 410a with his/her hand 420a, based on an interaction with the user. Here, the specific object may be used to indicate a target to be photographed, such as a thing, a person, or food viewed through the display, or a specific portion or area to be photographed in the object. The electronic device 100 may determine a specific object 410a, which is recognized as touched (430a) by the user's hand 420a, as an target object to be locked. For example, the electronic device 100 may identify an object (e.g., a cup) 410a touched (430a) by the user with the hand 420a in the first preview image screen 400a obtained through the camera (e.g., the image sensor 150 of FIG. 1). The electronic device 100 may recognize the object (e.g., a cup) 410a, which is identified as touched (430a), as an essential subject that the user wishes to be included in an image (e.g., a photo) to be photographed. The electronic device 100 may set the object (e.g., a cup) 410a recognized as the essential subject as the target object to be locked. The electronic device 100 may generate a notification for notifying the user that the target object to be locked has been set. The electronic device 100 may generate a notification at a time when it is recognized that the user's hand 420a touches (430a) the specific object (e.g., a cup) 410a, rather than at a time when the target object to be locked is set.

The electronic device 100 may provide the notification 440a in various ways. The electronic device 100 may allow the user to recognize the setting of the target object to be locked using at least one of auditory information such as an audio signal, visual information such as text, or tactile information such as vibration. For example, when the notification 440a is provided using the auditory information, the electronic device 100 may generate a sound effect recognized by the user, such as "chug" at the time when the user's hand 420a touches (430a) the object (e.g., a cup) 410a, recognizes the object (e.g., a cup) 410a touched (430a) by the user's hand 420a as the target object to be locked, or sets the recognized target object to be locked. For example, when the notification 440a is provided using the auditory information, the electronic device 100 may generate a guide voice that is easy for the user to recognize, such as "a blue cup has been set as the object to be locked" at the time when the user's hand 420a touches (430a) an object (e.g., a cup) 410a included in the screen displayed on the display 140, recognizes the object (e.g., a cup) 410a touched (430a) by the user's hand 420a as the target object to be locked, or sets the recognized target object to be locked. For example, when the notification 440a is provided using the visual information, the electronic device 100 may display, through a display (e.g., the display 140 of FIG. 1), a guide message such as "a cup has been set as the target object to be locked" at the time when the user's hand 420a touches (430a) an object (e.g., a cup), recognizes the object (e.g., a cup) 410a touched (430a) by the user's hand 420a as a target object to be locked, or sets the recognized target object to be locked. For example, when the notification 440a is provided using the tactile information, the electronic device 100 may generate vibration in a manner (e.g., the number of times, a period, or a pattern) agreed on to the user at the time when the user's hand 420a touches (430a) an object (e.g., a cup) 410a, recognizes the object (e.g., a cup) 410a touched (430a) by the user's hand 420a as a target object to be locked, or sets the recognized target object to be locked.

As described above, the method for recognizing or setting the target object to be locked by the user's touch 430a may be applied in a photographing environment in which a specific object (e.g., a cup) 410a is positioned within a distance that the user's hand 420a may substantially touch.

Referring to FIG. 4B, the electronic device 100 may recognize that the user indicates (430b) the specific object (e.g., a cup) 410b with a hand 420b (e.g., a finger) based on an interaction with the user. Here, the hand may be used to indicate a target to be photographed, such as a thing, a person, or food viewed through the display, or a specific portion or area to be photographed in the object. The electronic device 100 may determine a specific object 410b, which is recognized as indicated (430b) by the user's hand 420b, as target object to be locked. For example, when the specific object (e.g., a cup) 410b is within a predetermined distance from the user but is not positioned in the direction indicated by the user's hand 420b, i.e., on the direction vector, the electronic device 100 may assign a relatively high priority for recognizing another object positioned on the direction vector as the target object to be locked.

For example, the electronic device 100 may identify an object (e.g., a cup) 410b indicated (430b) by the user with the hand 420a on the first preview image screen 400b obtained through the camera (e.g., the image sensor 150 of FIG. 1). The electronic device 100 may recognize the object (e.g., a cup) 410b, which is identified as indicated (430b), as an essential subject that the user wishes to be included in an image (e.g., a photo) to be photographed. The electronic device 100 may set the object (e.g., a cup) 410b recognized as the essential subject as the target object to be locked. The electronic device 100 may generate a notification for notifying the user that the target object to be locked has been set. The electronic device 100 may generate a notification at a time when it is recognized that the user's hand 420b indicates (430b) the specific object (e.g., a cup) 410b, rather than at a time when the target object to be locked is set.

The electronic device 100 may provide the notification 440b in various ways. The electronic device 100 may allow the user to recognize the setting of the target object to be locked using at least one of auditory information such as an audio signal, visual information such as text, or tactile information such as vibration. For example, when the notification 440b is provided using the auditory information, the electronic device 100 may generate a sound effect recognized by the user, such as "chug" at the time when the user's hand 420b indicates (430b) the object (e.g., a cup) 410b, recognizes the object (e.g., a cup) 410b indicated (430b) by the user's hand 420b as the target object to be locked, or sets the recognized target object to be locked. For example, when the notification 440b is provided using the auditory information, the electronic device 100 may generate a guide voice that is easy for the user to recognize, such as "a blue cup has been set as the target object to be locked" at the time when the user's hand 420b indicates (430b) an object (e.g., a cup) 410b included in the screen displayed on the display 140, recognizes the object (e.g., a cup) 410b indicated (430b) by the user's hand 420b as the target object to be locked, or sets the recognized target object to be locked. For example, when the notification 440b is provided using the visual information, the electronic device 100 may display, through a display (e.g., the display 140 of FIG. 1), a guide message such as "a cup has been set as the target object to be locked" at the time when the user's hand 420b indicates (430b) an object (e.g., a cup) 410b, recognizes the object (e.g., a cup) 410b indicated (430b) by the user's hand 420b as a target object to be locked, or sets the recognized target object to be locked. For example, when the notification 440b is provided using the tactile information, the electronic device 100 may generate vibration in a manner (e.g., the number of times, a period, or a pattern) agreed on with to the user at the time when the user's hand 420b indicates (430b) an object (e.g., a cup) 410b, recognizes the object (e.g., a cup) 410b indicated (430b) by the user's hand 420b as a target object to be locked, or sets the recognized target object to be locked.

As described above, the method for recognizing or setting the target object to be locked by the user's indication 430b may be applied when a specific object (e.g., a cup) 410b that is substantially out of reach of the user's hand 420b or difficult to touch with the hand 420b is to be selected as the target object to be locked.

Referring to FIG. 4C, the electronic device 100 may recognize that the user touches (430c) a specific object (e.g., a cup) 410c included in a screen (e.g., a preview screen) displayed on a display (e.g., the display 140 of FIG. 1) with his/her hand 420c. Here, the specific object may be used to indicate a target to be photographed, such as a thing, a person, or food viewed through the display, or a specific portion or area to be photographed in the object. The electronic device 100 may determine a specific object 410c, which is recognized as touched (430c) by the user's hand 420c on the screen displayed on the display 140, as the target object to be locked. For example, the electronic device 100 may identify an object (e.g., a cup) 410c touched (430c) by the user with the hand 420c on the first preview image screen 400c obtained through the camera (e.g., the image sensor 150 of FIG. 1). The electronic device 100 may recognize the object (e.g., a cup) 410c, which is identified as touched (430c), as an essential subject that the user wishes to be included in an image (e.g., a photo) to be photographed. The electronic device 100 may set the object (e.g., a cup) 410c recognized as the essential subject as the target object to be locked. The electronic device 100 may generate a notification for notifying the user that the target object to be locked has been set. The electronic device 100 may generate a notification at a time when it is recognized that the user's hand 420c touches (430c) the specific object (e.g., a cup) 410c included in the screen displayed on the display 140, rather than at a time when the target object to be locked is set.

The electronic device 100 may provide the notification 440c in various ways. The electronic device 100 may allow the user to recognize the setting of the target object to be locked using at least one of auditory information such as an audio signal, visual information such as text, or tactile information such as vibration. For example, when the notification 440c is provided using the auditory information, the electronic device 100 may generate a sound effect recognized by the user, such as "chug" at the time when the user's hand 420c touches (430c) the object (e.g., a cup) 410c included in the screen displayed on the display 140, recognizes the object (e.g., a cup) 410c touched (430c) by the user's hand 420c as the target object to be locked, or sets the recognized object to be locked. For example, when the notification 440c is provided using the auditory information, the electronic device 100 may generate a guide voice that is easy for the user to recognize, such as "a blue cup has been set as the target object to be locked" at the time when the user's hand 420c touches (430c) an object (e.g., a cup) 410c included in the screen displayed on the display 140, recognizes the object (e.g., a cup) touched (430c) by the user's hand 420c as the target object to be locked, or sets the recognized target object to be locked. For example, when the notification 440c is provided using the visual information, the electronic device 100 may display, through a display (e.g., the display 140 of FIG. 1), a guide message such as "a cup has been set as the target object to be locked" at the time when the user's hand 420c touches (430c) an object (e.g., a cup) 410c included in the screen displayed on the display 140, recognizes the object (e.g., a cup) 410c touched (430c) by the user's hand 420c as a target object to be locked, or sets the recognized target object to be locked. For example, when the notification 440c is provided using the tactile information, the electronic device 100 may generate vibration in a manner (e.g., the number of times, a period, or a pattern) agreed on with to the user at the time when the user's hand 420c touches (430c) an object (e.g., a cup) 410c included in the screen displayed on the display 140, recognizes the object (e.g., a cup) 410c touched (430c) by the user's hand 420c as a target object to be locked, or sets the recognized object to be locked.

As described above, when the user touches the specific object 410c on the preview screen, the electronic device 100 may inform the user of identification information such as the status and/or name of the touched specific object 410c using the vision recognition function. In this case, the user may identify the status and/or identification information informed of by the electronic device 100, and then additionally tap a specific area of the preview screen to select the specific object 410c as the target object to be locked.

The electronic device 100 may recognize or set the target object to be locked by a hand gesture such as tapping or swipe with a hand, as well as the touch 430a or the indication 430b by the user.

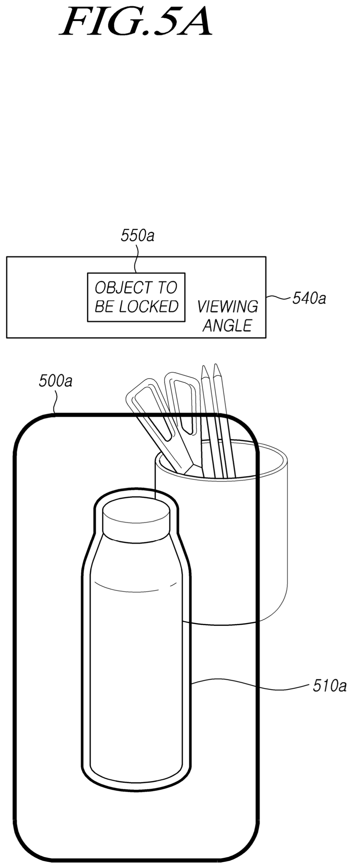

FIGS. 5A to 5G are views illustrating an example of interaction for locking and unlocking a target object for photographing in an electronic device (e.g., the electronic device 100 of FIG. 1) according to an embodiment of the disclosure.

Referring to FIGS. 5A to 5C, the electronic device 100 may monitor whether the target object 550a to be locked is positioned within the viewing angle 540a. When it is recognized that the target object 550a to be locked is positioned within the viewing angle 540a, the electronic device 100 may recognize the target object 510a to be locked on a screen 500a (e.g., a preview screen). The electronic device 100 may designate a masking area for selecting the target object 510a to be locked on the screen 500a (see FIG. 5A).

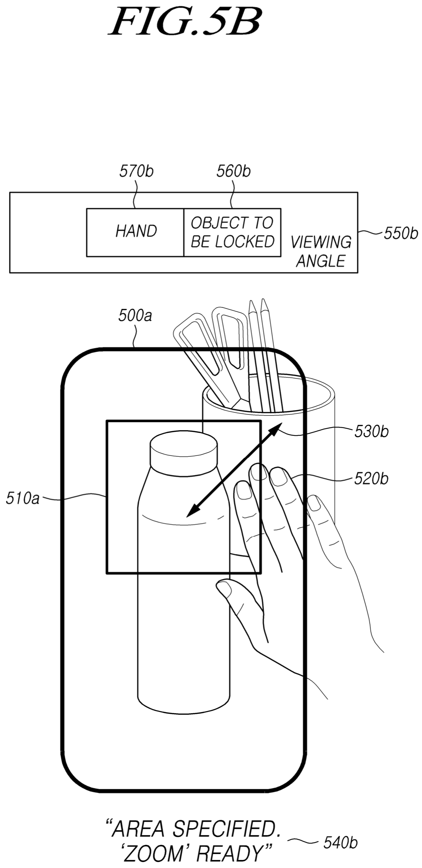

The electronic device 100 may monitor whether the target object 560b to be locked (e.g., the target object image) and the user's hand 570b (e.g., the hand image) are included within the viewing angle 550b. When the target object 560b to be locked and the user's hand 570b are included within the viewing angle 550b, the electronic device 100 may recognize that the user's hand 520b repeats a movement 530b (e.g., a movement of waving the hand in the corresponding portion) set to select a specific portion 510b of the object on to be locked the screen 500b (e.g., a preview screen). In this case, the electronic device 100 may identify that the screen 500b is a zoom-in request for the selected portion 510b of the target object to be locked. The electronic device 100 may output a message 540b for indicating that the selected portion 510b of the target object is to be locked set as an area for zoom-in. For example, the electronic device 100 may output a guide voice and/or a guide message saying that "the area is specified and 'zoom' is ready" (see FIG. 5B).

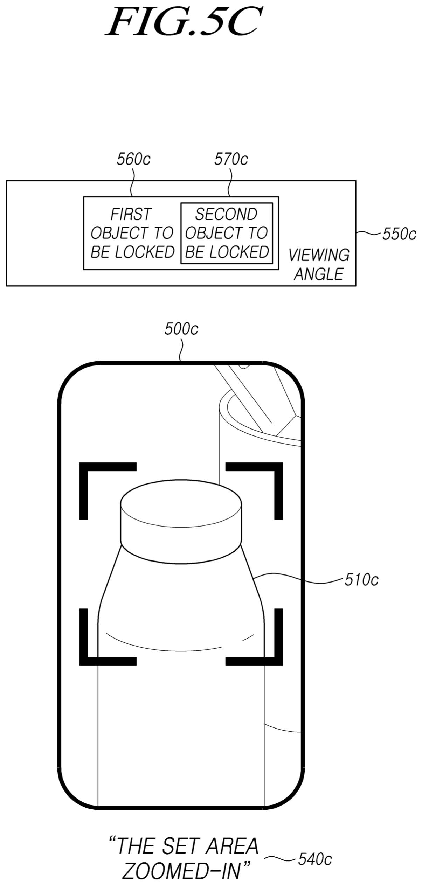

The electronic device 100 may monitor whether a first target object to be locked 560c and a second target object to be locked 570c are included within the viewing angle 550c. When the first target object to be locked 560c and the second target object to be locked 570c are included within the viewing angle 550c, the electronic device 100 may display, on a display (e.g., the display 140 of FIG. 1), a screen 500c (e.g., a preview screen) resulting from zooming in the portion 510c selected for zoom-in (see FIG. 5C). For example, the electronic device 100 may display, on the display 140, the zoom-in screen 500c of the selected portion 510c based on the zoom-in function of the image sensor 150 by determining the time when the user's hand exits the screen 500b as ready for photographing. The electronic device 100 may output a message 540c indicating that the selected portion 510c of the target object to be locked is zoomed in. For example, the electronic device 100 may output a guide voice and/or a guide message "the set area zoomed in" (see FIG. 5C).

According to the above-described operations illustrated in FIGS. 5A to 5C, the electronic device 100 may stepwise perform a primary lock (or a superordinate lock) on the water container which is the first target object 560c to be locked and a secondary lock (or a subordinate lock) on the lid portion of the water container which is the second target object to be locked 570c. In this case, the electronic device 100 may keep the water container locked as the first target object 560c, and may keep the lid portion of the water container locked as the second target object 570c. When the photographing event occurs, the electronic device 100 may maintain the locked state so that the locked first target object 560c and the locked second target object 570c are included within the viewing angle for photographing.

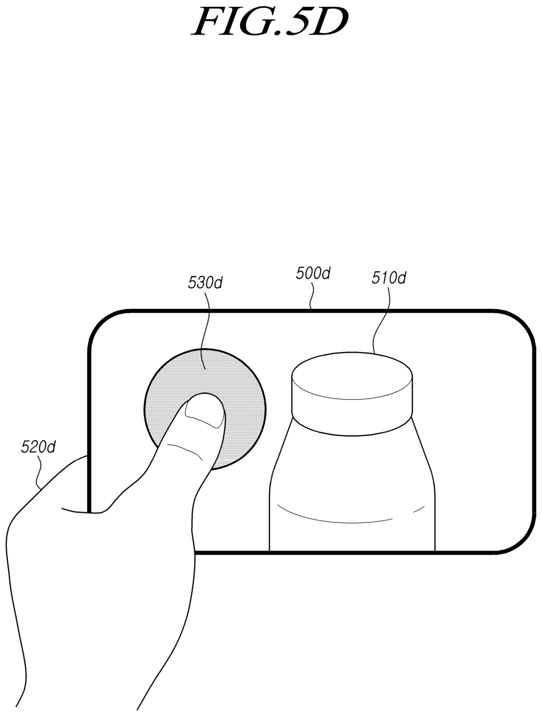

Referring to FIGS. 5D to 5G, the electronic device 100 may monitor whether a user interaction 530d requesting to enter an unlock process occurs. The user interaction 530d requesting to enter the unlock process may be a "long press interaction". For example, when it is detected that the user presses the touch screen 500d including the target object 510d (e.g., the lid portion of the water container locked as the second target object) for a defined time (e.g., 2 seconds) or longer using the hand 520d or a pencil, the electronic device 100 may determine that an event for requesting to activate the unlock process occurs. The electronic device 100 may output notification information for notifying the user of entry into the unlock process in response to the user interaction 530d. For example, in order to notify the user of entry into the unlock process, the electronic device 100 may generate an unlock identification sound (e.g., drrrrk) at a corresponding time. For example, in order to inform the user of entry into the unlock process, the electronic device 100 may output a guide voice or a guide message saying, "You can unlock from now on."

The electronic device 100 may monitor whether the user interaction 530e requesting to unlock occurs. The user interaction 530e requesting to unlock may be, e.g., an interaction in which the user pushes the touch screen 500e from the left side to the right side of the screen while touching the touch screen 500e with the finger 520e. When the user interaction 530e requesting to unlock occurs, the electronic device 100 may unlock the second target object 570e that has been displayed in the locked state on the current screen. In this case, the electronic device 100 may output a voice or a text indicating that the second target object 570e is unlocked and the first target object 560e is kept locked. For example, the electronic device 100 may generate a voice "object locked" (see 540e). Thereafter, the electronic device 100 may display the first target object 510e, which is kept locked, on the screen 500e.

As described above, in a state in which the locking is set in multiple stages, the electronic device 100 may sequentially unlock the target objects based on the locking order whenever the user interaction 530e requesting to unlock occurs.

The electronic device 100 may monitor whether the user interaction 530f requesting to resume locking occurs. The user interaction 530f requesting to unlock may be, e.g., an interaction in which the user pushes the screen 500f from the right side to the left side of the screen while touching the screen 500f with the finger 520f. When the user interaction 530f requesting to unlock occurs, the electronic device 100 may keep locked the first target object 560e displayed in the locked state on the current screen, and may re-lock the unlocked second target object 570f (e.g., the lid portion of the water container). In this case, the electronic device 100 may output a voice or a text indicating that the first target object 560f is kept locked and the second target object 570f is relocked. For example, in order to indicate the locking of the second target object 570f, the electronic device 100 may generate a voice "lock resumed" (see 540f). Thereafter, the electronic device 100 may display the second target object 510f, which is kept locked, on the screen 500f.

As described above, in a state in which the locking is set in multiple stages, the electronic device 100 may sequentially resume the locking of the target object based on the locking order whenever the user interaction 530f requesting to resume the locking occurs.

The electronic device 100 may monitor whether a user interaction 530g requesting to collectively unlock occurs. The user interaction 530g requesting to collectively unlock may be a "long press interaction" or a "tap interaction" tapping the screen. For example, when it is detected that the user presses the screen 500g including the target object 510g (e.g., a water container locked as the first target object) for a defined time (e.g., 2 seconds) or longer or taps the screen a defined number of times using the hand 520g, the pencil, or the like, the electronic device 100 may determine that an event for requesting to collectively unlock occurs. In response to the user interaction 530g, the electronic device 100 may collectively unlock all the target objects (e.g., the first target object (water container) and the second target object (e.g., the lid portion of the water container)) to return to the initial state. In this case, the electronic device 100 may output a voice or text indicating that all the target objects 560g and 570g are unlocked. For example, the electronic device 100 may generate a voice saying, "All objects unlocked" (see 540g).

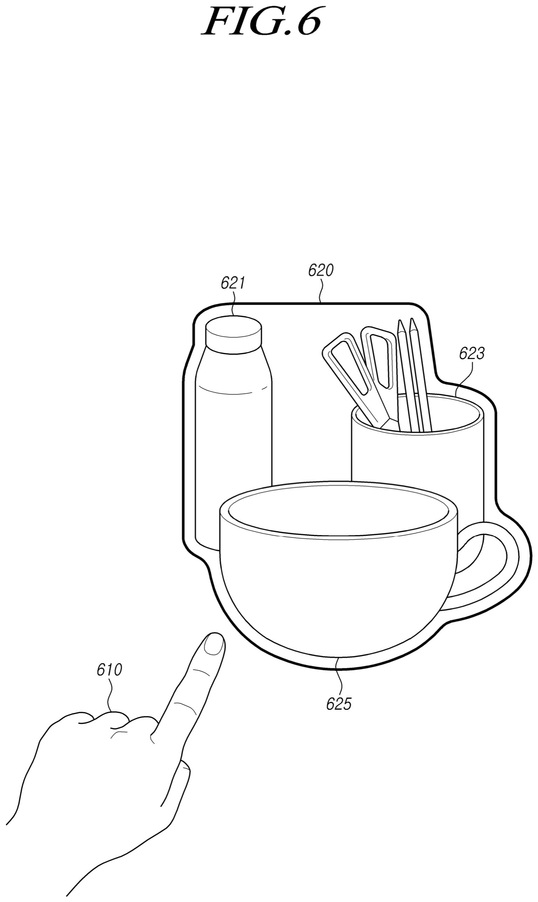

FIG. 6 is a view illustrating an implementation example of cluster lock in an electronic device (e.g., the electronic device 100 of FIG. 1) according to an embodiment.

Referring to FIG. 6, the electronic device 100 may recognize a request from a user 610 to group a plurality of objects positioned within the viewing angle into a cluster based on a user interaction. The plurality of objects may include, e.g., a water container 621, a writing instrument storage container 623, or a cup 625. For example, by estimating the finger movement of the user 610 within the viewing angle based on vision recognition technology, objects included within the outline 620 according to the finger movement may be set as target objects for cluster locking.

When the cluster locking is performed, the electronic device 100 may monitor whether all of the target objects for the cluster locking are included within the viewing angle for photographing. A specific operation for photographing with all of the target objects for cluster locking included within the viewing angle for photographing may be substantially the same as an operation performed in a state in which one target object is locked.

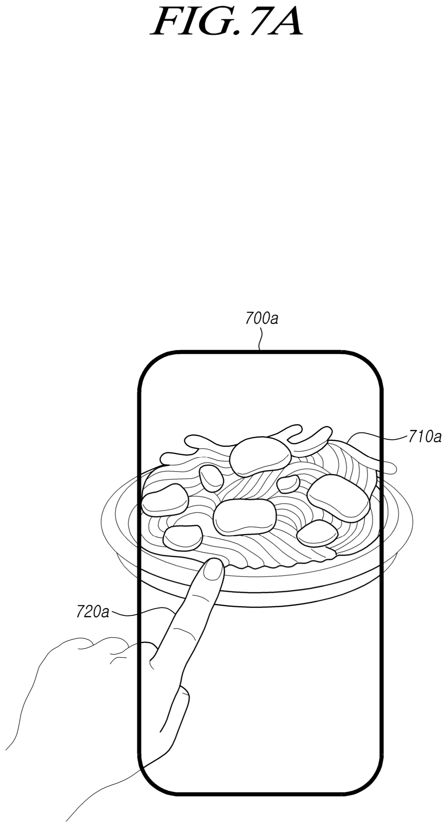

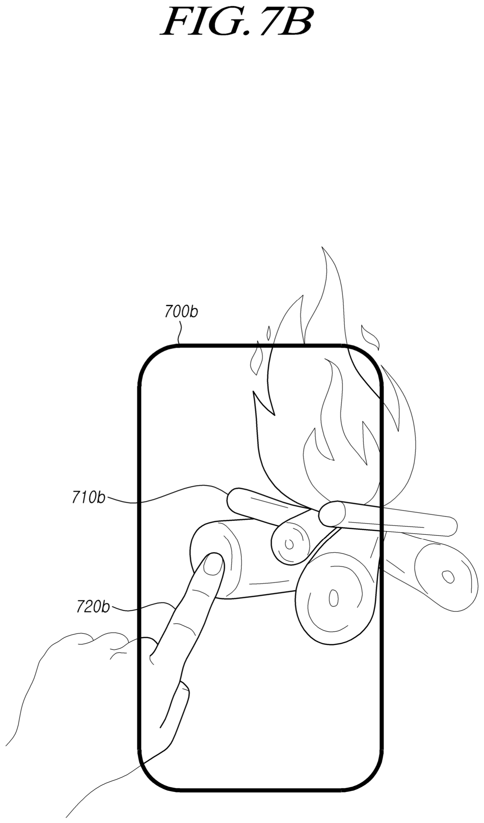

FIGS. 7A and 7B are views illustrating an example of locking a target object that may not be locked by a direct touch of a user in an electronic device (e.g., the electronic device 100 of FIG. 1) according to an embodiment of the disclosure.

Referring to FIG. 7A or FIG. 7B, the electronic device 100 may recognize that the user indicates a specific object 710a or 710b with a hand 720a or 720b (e.g., a finger) based on an interaction with the user. Here, the specific object may be an object (e.g., the food 710a or the bonfire 720b) that is viewed through the display 700a but is difficult to directly touch with the hand.

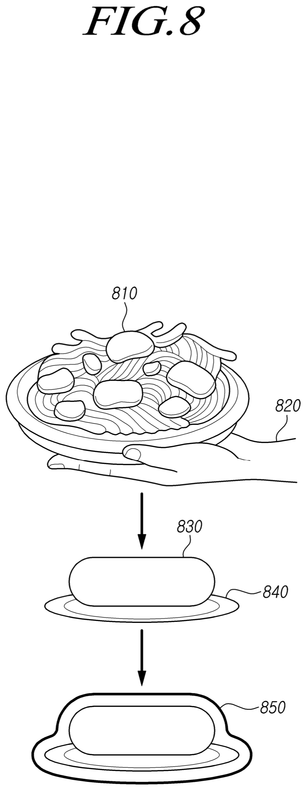

FIG. 8 is a view illustrating an example of locking in a state in which it may be difficult to specify a target touched directly by a user in an electronic device (e.g., the electronic device 100 of FIG. 1) according to an embodiment of the disclosure.

Referring to FIG. 8, when the user 820 holds a dish 810 containing food, it may not be easy for the electronic device 100 to determine whether the target object to be locked is the food or the dish. In this case, the intention of the user who wants to lock the entire dish 850 containing the food may be analyzed based on the data collected by the previous learning. The electronic device 100 may set the dish 850 containing the food as one target object without separately locking the food 830 and the dish 840 by reflecting the analyzed intention of the user.

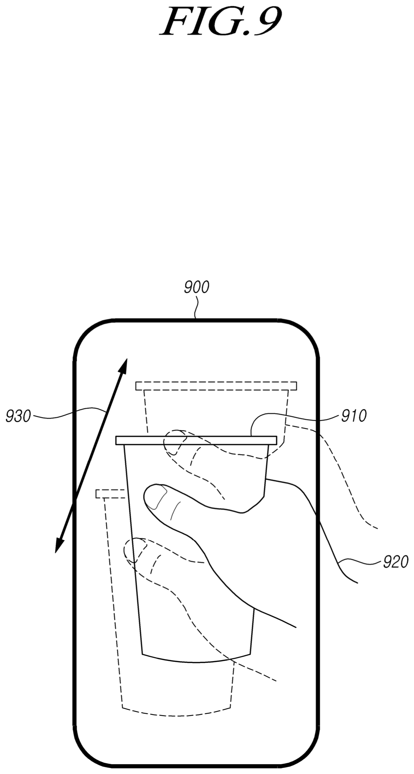

FIG. 9 is a view illustrating an example of locking when it is difficult to specify a target touched directly by a user in an electronic device (e.g., the electronic device 100 of FIG. 1) according to an embodiment of the disclosure.

Referring to FIG. 9, the electronic device 100 may recognize that the user 920 takes a motion 930 of repeatedly shaking the cup 910 containing beverage while holding it, based on a user interaction. In this case, since it is not easy to determine whether the locking target is the beverage or the cup, the electronic device 100 may lock the cup 910 containing the beverage and the hand 920 holding the cup as one target object.

FIG. 10 is a view illustrating an example in which an electronic device (e.g., the electronic device 100 of FIG. 1) guides to a position of a target object in a locked state within a viewing angle according to an embodiment of the disclosure.

Referring to FIG. 10, the electronic device 100 may obtain a position of a locked target object 1010 in a screen 1000 (e.g., a preview screen). For example, the electronic device 100 may divide the entire area of the screen 1000 into a plurality of division areas. For example, the electronic device 100 may divide an area within a range up to a predetermined distance in two opposite directions with respect to a substantial central axis of the screen 1000 as a central division area T₀. The electronic device 100 may divide an area remaining in one direction (e.g., a left direction) of the central division area T₀ on the screen 1000 as a first peripheral division area T₋₁. The electronic device 100 may divide an area remaining in another direction (e.g., a right direction) of the center division area T₀ on the screen 1000 as a second peripheral division area T₊₁. The electronic device 100 may divide an area that deviates from the screen 1000 in one direction (e.g., the left direction) as a first external division area T₋₂. The electronic device 100 may divide an area that deviates from the screen 1000 in another direction (e.g., the right direction) as a second external division area T₊₂.

The electronic device 100 may output an identification alarm (e.g., a first notification) for indicating which of the division areas (the central division area T₀, the first peripheral division area T₋₁, the second peripheral division area T₊₁, the first external division area T₋₂, or the second external division area T₊₂) the target object 1010 is positioned in. The electronic device 100 may set a different identification alarm for each of the division areas (the central division area T₀, the first peripheral division area T₋₁, the second peripheral division area T₊₁, the first external division area T₋₂, or the second external division area T₊₂). The electronic device 100 may output the identification alarm corresponding to the division area in which the target object 1010 is positioned.

As an example, the identification alarms may use the same sound, but may be defined to have a different volume for each division area. For example, the volume of the identification alarm corresponding to the central division area T₀ may be relatively larger than the volume of the other division areas (e.g., the first peripheral division area T₋₁, the second peripheral division area T₊₁, the first external division area T₋₂, or the second external division area T₊₂). Further, the volume of the identification alarm corresponding to the first peripheral division area T₋₁ or the second peripheral division area T₊₁ may be relatively larger than the volume of the first external division area T₋₂ or the second external division area T₊₂.

As an example, the identification alarm may be set differently for each of the division areas (the central division area T₀, the first peripheral division area T₋₁, the second peripheral division area T₊₁, the first external division area T₋₂, or the second external division area T₊₂). For example, the identification alarm (e.g., a clear or lucid beautiful sound or a smooth vibration) indicating that the target object is positioned 1010c in a central division area T₀ may be different from the identification alarm (e.g., a dull, dark, low sound, or irregular vibration) indicating that the target object is positioned 1010a, 1010b, 1010d, or 1010e in other division areas (e.g., the first peripheral division area T₋₁, the second peripheral division area T₊₁, the first external division area T₋₂, or the second external division area T₊₂). Further, the identification alarm indicating that the target object is positioned 1010b in the first peripheral division area T₋₁ or the target object is positioned 1010d in the second peripheral division area T₊₁ may be different from the identification alarm indicating that the target object is positioned 1010a in the first external division area T₋₂ or the target object is positioned 1010e in the second external division area T₊₂. Further, the identification alarm indicating that the target object is positioned 1010b in the first peripheral division area T₋₁ may be different from the identification alarm indicating that the target object is positioned 1010d in the second peripheral division area T₊₁. Further, the identification alarm indicating that the target object is positioned 1010a in the first external division area T₋₂ may be different from the identification alarm indicating that the target object is positioned 1010e in the second external division area T₊₂.

When the electronic device 100 outputs the identification alarm according to the above-described operation, the user may recognize the position of the target object 1010 on the screen of the electronic device 100 somewhat accurately only with the identification alarm. Accordingly, it may be easy for the user to take a photo in which the target object is disposed at a desired position within the viewing angle.

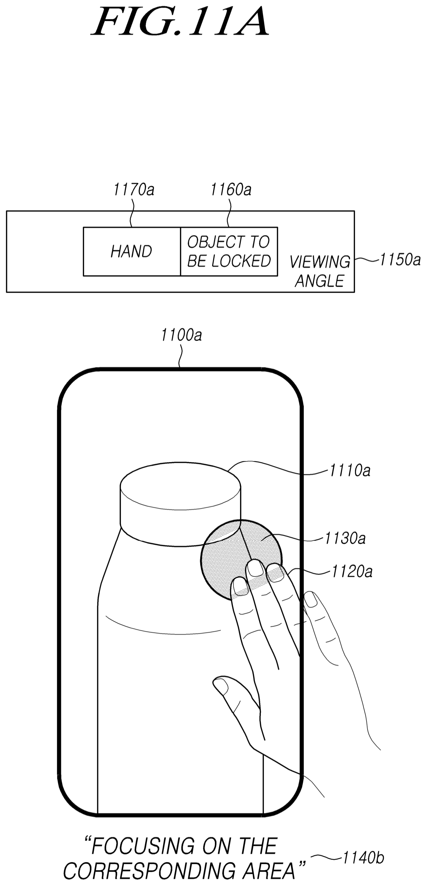

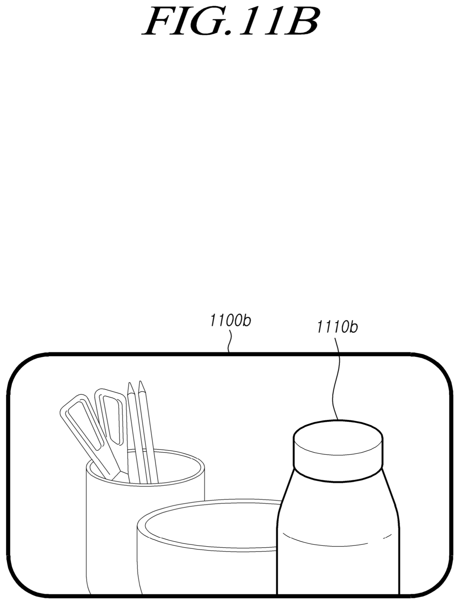

FIGS. 11A and 11B are views illustrating an example of focusing a target object in an electronic device (e.g., the electronic device 100 of FIG. 1) according to an embodiment of the disclosure.

Referring to FIG. 11A or FIG. 11B, the electronic device 100 may monitor whether a target object 1160a to be locked (e.g., a target object image) and the user's hand 1170a (e.g., a hand image) are included within the viewing angle 1150a. When the target object 1160a to be locked and the user's hand 1170a are included within the viewing angle 1150a, the electronic device 100 may recognize that the user's hand 1120a repeats a movement 1130a (e.g., a motion of tapping the corresponding portion with the hand a defined number of times) set to select a specific portion 1110a of the target object to be locked in the screen 1100a (e.g., a preview screen). In this case, the electronic device 100 may identify that it is a focusing request for the selected portion 1110a of the target object to be locked on the screen 1100a. The electronic device 100 may output a message 1140a indicating that the selected portion 1110a of the target object to be locked is set as a selected portion for focusing. For example, the electronic device 100 may output a guide voice and/or a guide message saying, "focusing on the corresponding area" (see FIG. 11A).

When the specific area 1110a is set to be focused, the electronic device 100 may maintain the focusing state for the specific area 1110b on the screen 1100b of the changed viewing angle even with the change in the viewing angle (see FIG. 11B).

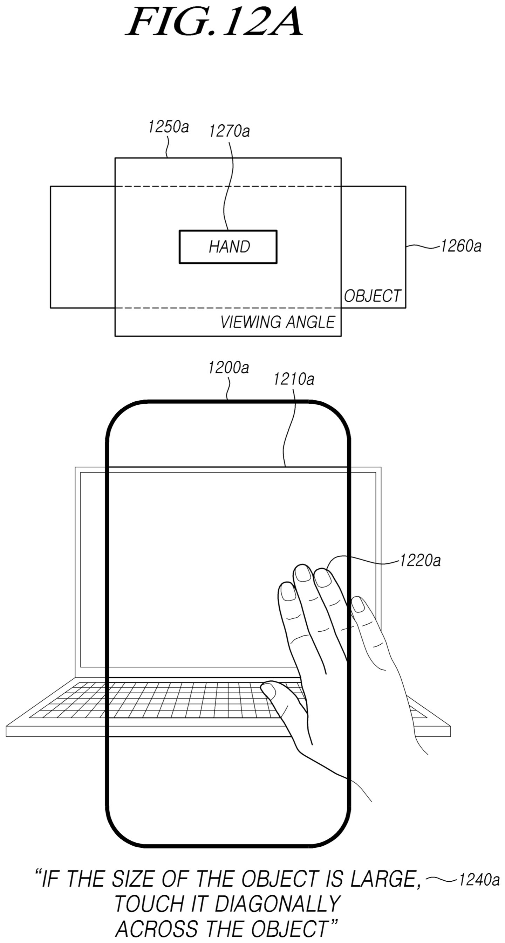

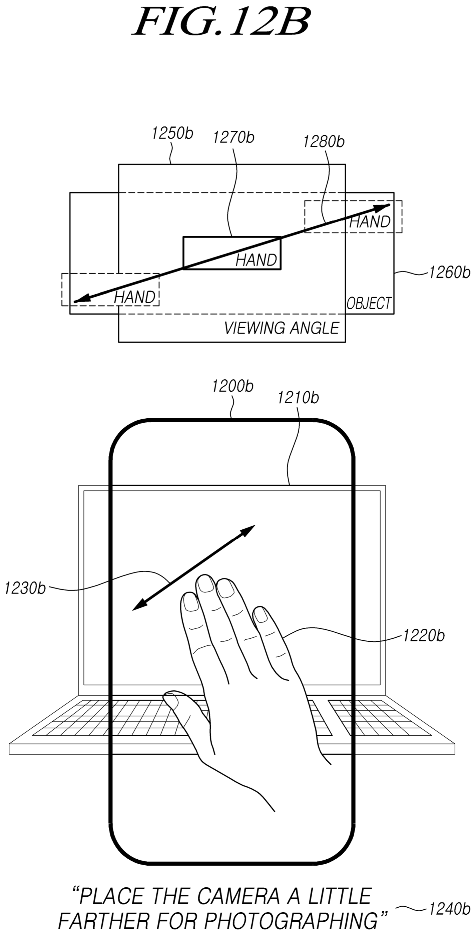

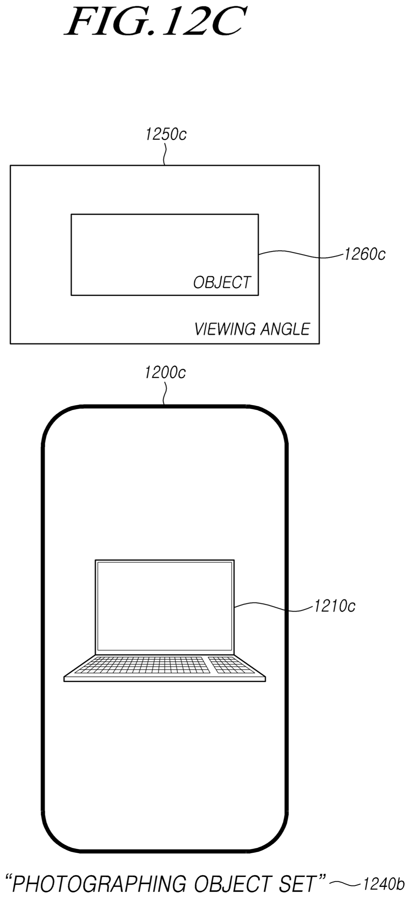

FIGS. 12A, 12B, and 12C are views illustrating an example for leading to adjustment of a photographing distance in an electronic device (e.g., the electronic device 100 of FIG. 1) according to an embodiment of the disclosure.

Referring to FIG. 12A, FIG. 12B, or FIG. 12C, the electronic device 100 may monitor whether the target objects 1260a and 1210a in the locked state deviate from the viewing angle 1250a. For example, when it is detected that the image (e.g., the outline of the target object) of the target objects 1210a and 1260a is not included in the full screen 1200a, the electronic device 100 may provide a notification 1240a for indicating the corresponding situation to the user. The notification may be performed in such a manner as to output a voice or display a message. For example, the electronic device 100 may output a voice guide saying, "If the size of the object is large, please touch it diagonally across the object."

The electronic device 100 may monitor whether the hands 1220b and 1270b of the user move in the diagonal directions 1230b and 1280b in a state in which the target objects 1210b and 1260b are out of the viewing angle 1250b. When the movement of the user's hands 1220b and 1270b is detected repeatedly in the diagonal directions 1230b and 1280b, the electronic device 100 may determine that the user requests to include the target objects 1210b and 1260b within the viewing angle 1250b. In this case, the electronic device 100 may output a notification 1240b for guiding the user to a motion necessary to include the target objects 1210b and 1260b within the viewing angle 1250b. For example, the electronic device 100 may output a voice guide saying, "Place the camera a little farther for photographing."

The electronic device 100 may track whether the target object 1260c is included within the viewing angle 1250c as the user adjusts the position of the camera. When the entire image of the target object 1210c or 1260c is included within the viewing angle 1250c, the electronic device 100 may output a notification 1240c for indicating it to the user. For example, the electronic device 100 may output a voice guide saying that "a photographing object has been set."

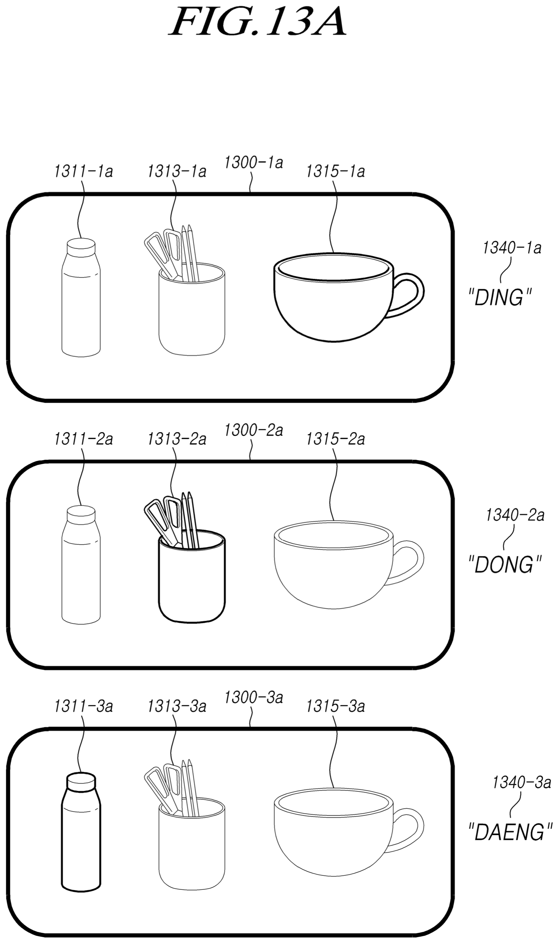

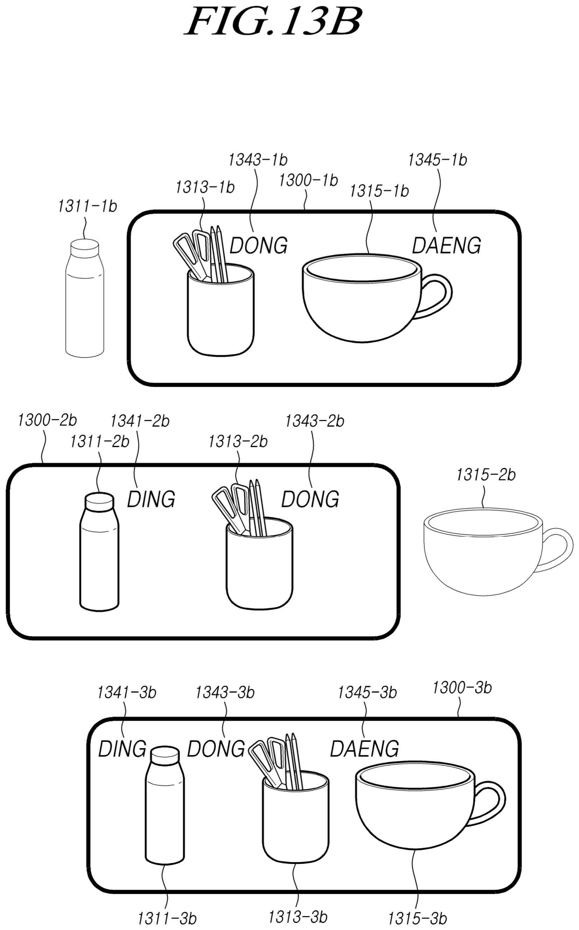

FIGS. 13A and 13B are views illustrating an example of identifying a target object included in a viewing angle in an electronic device (e.g., the electronic device 100 of FIG. 1) according to an embodiment of the disclosure.

Referring to FIG. 13A and FIG. 13B, the electronic device 100 may sequentially lock objects 1311-1a, 1313-1a, and 1315-1a included within the viewing angle 1300-1a, 1300-2a, and 1300-3a. Whenever the objects 1311-1a, 1313-1a, and 1315-1a included within the viewing angle 1300-1a, 1300-2a, and 1300-2a are sequentially locked, the electronic device 100 may output identification information corresponding to the target object. The identification information may be visual information, auditory information, or tactile information. For example, the identification information may be an audio signal which is auditory information such as "ding 1340-1a", "dong 1340-2a", or "daeng 1340-3a". The user may recognize the target object included within the viewing angle based on the identification information output by the electronic device 100 by remembering the order in which the lock is set and the identification information corresponding to the order.

The electronic device 100 may recognize objects 1311-1b, 1313-1b, and 1315-1b included within the viewing angle 1300-1b, 1300-2b, and 1300-3b, and may output identification information corresponding to the recognized target objects. For example, when the second and third target objects 1313-1b and 1315-1b are included within the viewing angle 1300-1b and the first target object 1311-1b is not included, the electronic device 100 may output identification information (e.g., "dong 1343-1b" and "daeng 1345-1b") corresponding thereto. For example, when the first and second target objects 1311-2b and 1313-2b are included within the viewing angle 1300-2b and the third target object 1315-2b is not included, the electronic device 100 may output identification information (e.g., "ding 1341-2b" and "dong 1343-2b") corresponding thereto. For example, when the first, second, and second target objects 1311-3b, 1313-3b, and 1315-3b are included within the viewing angle 1300-3b, the electronic device 100 may output identification information (e.g., "ding 1341-3b", "dong 1343-3b", and "daeng 1345-3b") corresponding thereto.

FIGS. 14A and 14B are views illustrating an example of guiding to an image quality of a target object in an electronic device (e.g., the electronic device 100 of FIG. 1) according to an embodiment of the disclosure.

Referring to FIG. 14A or FIG. 14B, the electronic device 100 may identify sharpness of the target objects 1410a1 and 1410a2 included in the screens 1400a1 and 1400a2, and may provide identification information 1440a1 and 1440a2 for distinguishing the identified sharpness to the user. When the sharpness of the target object 1410a1 included in the screen 1400a1 is high and the sharpness of the target object 1410a2 included in the screen 1400a2 is blurred, the electronic device 100 may output different identification information 1440a1 and 1440a2. For example, when the sharpness of the target object 1410a1 included in the screen 1400a1 is high, the electronic device 100 may output auditory information "ting 1440a1". For example, when the sharpness of the target object 1410a2 included in the screen 1400a2 is blurred, the electronic device 100 may output auditory information "tick 1440a2". In this case, the user may recognize sharpness of the target objects 1410a1 and 1410a2 included in the screens 1400a1 and 1400a2 based on the identification information output by the electronic device 100.

When the user sees the taken photos using an application program such as a gallery, the electronic device 100 may sequentially select and output, on a large screen, the photos 1431b, 1433b, 1435b, and 1437b stored in the gallery 1430b in response to the user's manipulation. The electronic device 100 may output identification information 1441b, 1443b, and 1445b corresponding to accuracy based on sharpness, composition, or the like of the photo output on the large screen. For example, when a photo taken properly reflecting the user's intention 1410b is selected, the electronic device 100 may output auditory information "ting 1443b". For example, when a photo taken relatively improperly reflecting the user's intention is selected, the electronic device 100 may output auditory information "ticktickticktick 1441b and 1445b".

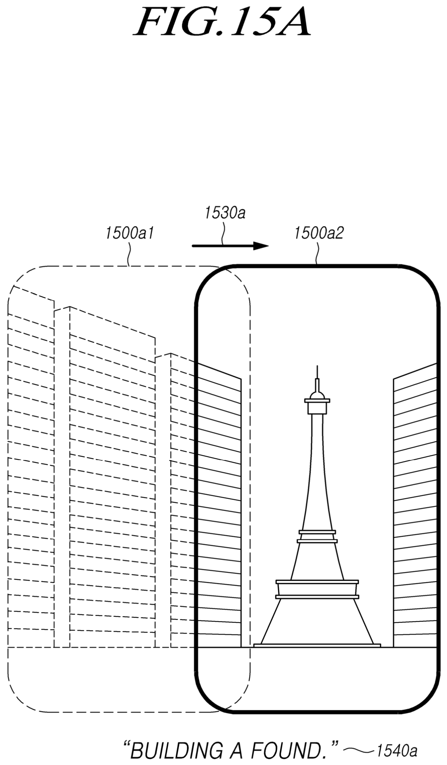

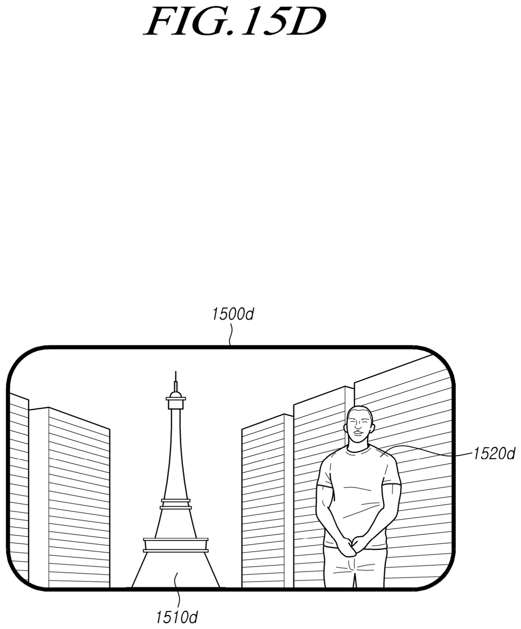

FIGS. 15A to 15D are views illustrating an example of leading to photographing based on data stored in an electronic device (e.g., the electronic device 100 of FIG. 1) according to an embodiment of the disclosure.

Referring to FIGS. 15A to 15D, when the user changes the viewing angle (e.g., moves 1530a from left to right) for the purpose of photographing, the electronic device 100 may analyze whether there is a subject that desired to be photographed by referring to collected data (e.g., a photo taken by another person in the corresponding place) such as the place that the user wants to photograph in the preview screens 1500a1 and 1500a2 obtained thereby. When a subject that desired to be photographed is in the preview screens 1500a1 and 1500a2, the electronic device 100 may output a notification 1540a indicating the same. For example, the electronic device 100 may generate auditory information "Building A found."

When an event (e.g., a screen touch 1520b by the user) in which the corresponding subject 1510b in the screen 1500b is set as a target object to be locked occurs by the user, the electronic device 100 may output a notification 1540b indicating to the user that the corresponding subject 1510b has been set as the target object. For example, the electronic device 100 may generate auditory information "Building A has been set."

The electronic device 100 may output a notification for indicating the position 1550c of the target object 1510c on the screen 1500c (see FIG. 10). The position 1550c of the target object 1510c may be changed by changing the viewing angle of the electronic device 100. For example, the position of the target object 1510c may move in the left direction (-x) or the right direction (+x). The electronic device 100 may provide the user with identification information capable of identifying the position 1550c of the changing target object 1510c. When the user recognizes that the target object 1510d is disposed at a desired position, the user may attempt to photograph. When the target object 1510d is disposed at a desired position and a person 1520d to be photographed is positioned within the viewing angle 1500d, the electronic device 100 may perform an operation for photographing.

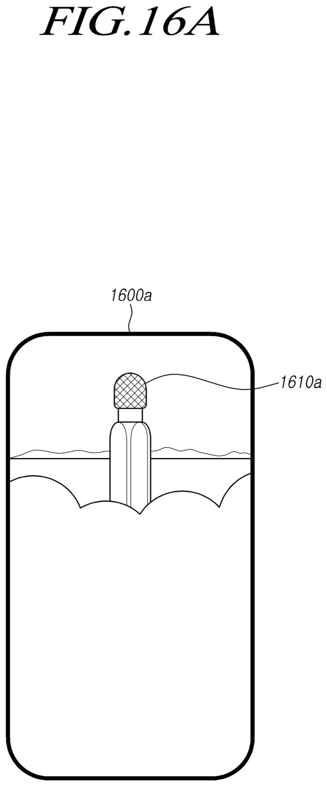

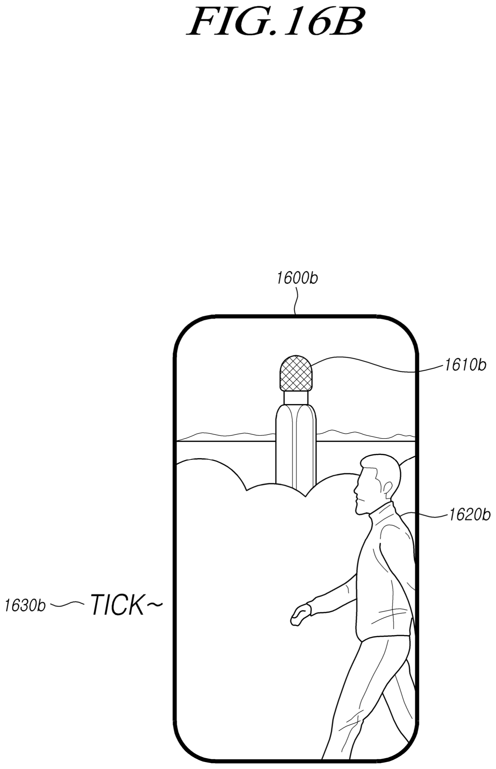

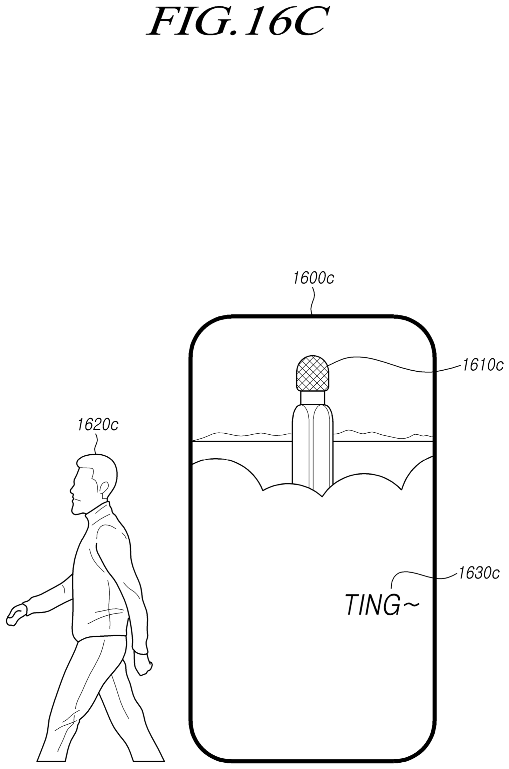

FIGS. 16A, 16B, and 16C are views illustrating an example of indicating that a disturb event occurs during photographing in an electronic device (e.g., the electronic device 100 of FIG. 1) according to an embodiment of the disclosure.

Referring to FIGS. 16A, 16B, and 16C, when an unwanted event (e.g., the person 1620b enters the viewing angle 1600b) occurs while the user photograph a desired subject 1610a, 1610b, and 1610c using the electronic device 100, the electronic device 100 may provide a notification 1630b for indicating the event to the user. The notification may be provided by at least one of visual information, auditory information, or tactile information. For example, the electronic device 100 may output an audio signal "tick" in response to the occurrence of an event that disturbs photographing.

When the event that disturbs photographing is resolved, the electronic device 100 may provide a notification 1630c for indicating the event to the user. The notification may be provided by at least one of visual information, auditory information, or tactile information. For example, the electronic device 100 may output an audio signal "ting" in response to the event that disturbs photographing being resolved.

Although the notification is provided to the user due to the occurrence of the disturbing event, if a photographing event occurs, the electronic device 100 may determine that the corresponding event is a normal event, not a disturbing event, and thus perform photographing.

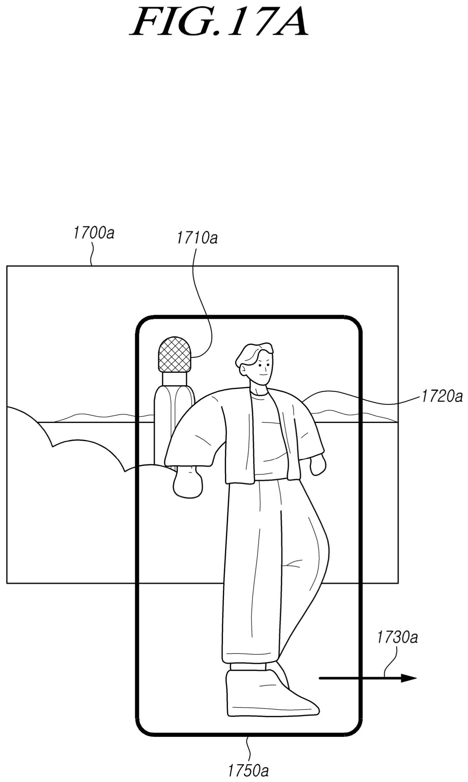

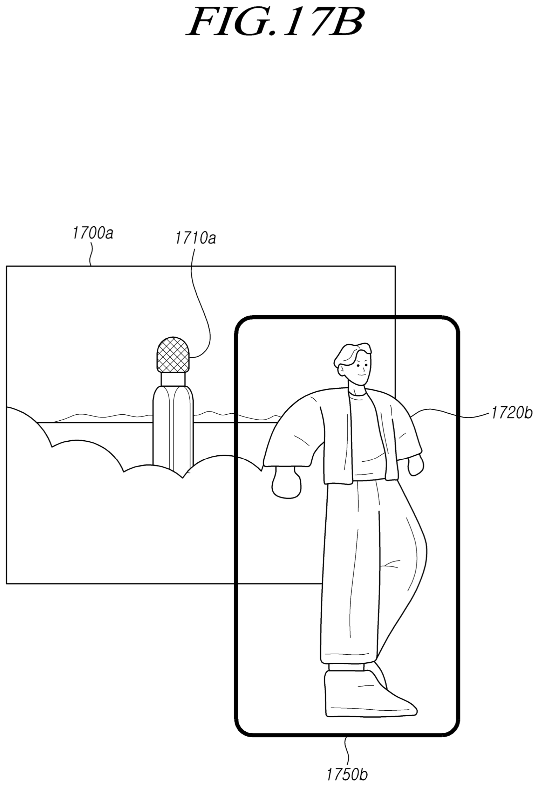

FIGS. 17A to 17D are views illustrating an example of performing photographing by a request of a subject in an electronic device (e.g., the electronic device 100 of FIG. 1) according to an embodiment of the disclosure.

Referring to FIGS. 17A to 17D, when a new object 1720a, 1720b, 1720c, and 1720d enters (1730a) within the viewing angle 1700a, 1700b, 1700c, and 1700d in a situation in which photographing is performed using the locked target object 1710a, 1710b, 1710c, and 1710d as the subject, the electronic device 100 may output a notification for indicating the same to the user. In this case, the notification may be output by at least one of visual information, auditory information, or tactile information. As an example, the electronic device 100 may output auditory information saying "A person is in front. Would you like to keep shooting?"

When the user's intention to perform photographing is recognized, the electronic device 100 may determine that the corresponding object 1720a, 1720b, 1720c, and 1720d has entered the viewing angle 1700a, 1700b, 1700c, and 1700d for photographing. In this case, the electronic device 100 may photograph at a viewing angle including the corresponding object 1720a, 1720b, 1720c, and 1720d.

When the control of the photographing function is requested through interaction with the object 1720a, 1720b, 1720c, and 1720d entering the viewing angle 1700a, 1700b, 1700c, and 1700d, the electronic device 100 may reflect the same and perform photographing. For example, when the object 1720a, 1720b, 1720c, and 1720d entering the viewing angle 1700a, 1700b, 1700c, and 1700d takes repetitive actions indicating a specific portion by hand, the electronic device 100 may determine that it is instructed to perform photographing with the corresponding portion focused. The electronic device 100 may output a notification for indicating to the user the situation according to the determination. As an example, the electronic device 100 may output a voice saying, "The person wants to focus on a specific portion. Would you like to continue?"

The above-described operations allows the user to obtain a photo in which priority is given to the intention of photographing the object within the viewing angle.

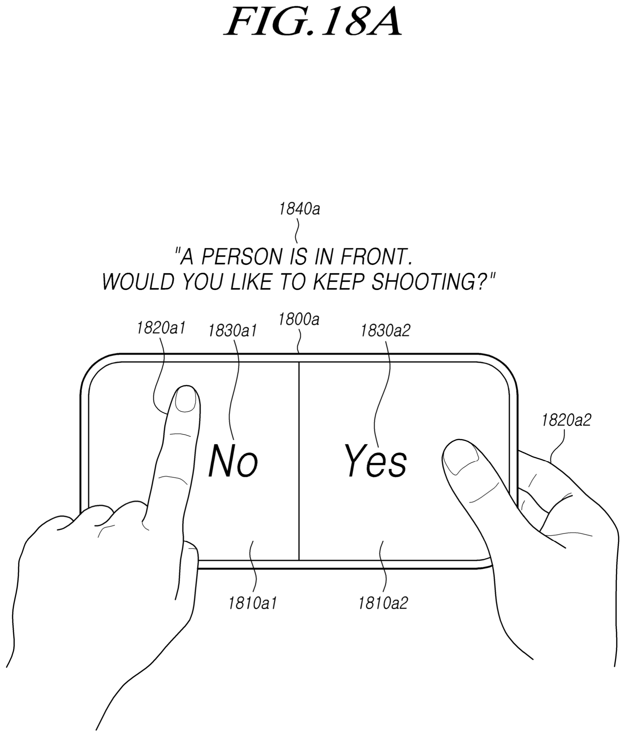

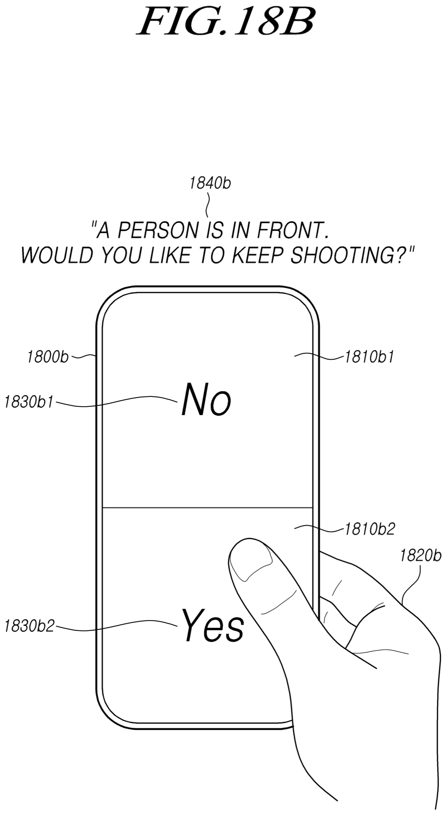

FIGS. 18A and 18B are views illustrating an example of communication with a user in an electronic device (e.g., the electronic device 100 of FIG. 1) according to an embodiment of the disclosure.

Referring to FIG. 18A, when an event where the user's intention should be reflected occurs during photographing, the electronic device 100 may generate a notification 1840a for indicating the same to the user. As an example, the electronic device 100 may output a voice saying "A person is in front. Would you like to keep shooting?"

The electronic device 100 may provide a user interface to which the user may respond to the notification. For example, when the user grips the electronic device 100 in the horizontal direction 1820a2, the electronic device 100 may divide the screen 1800a left and right. The electronic device 100 may display a first option (e.g., No) 1830a1 in the first division area 1810a1, and may display a second option (e.g., Yes) 1830a2 in the second division area 1810a2.

The electronic device 100 may identify the area 1820a1 touched by the user of the first division area 1810a1 or the second division area 1810a2, and may perform an operation according to the option corresponding to the touched area.

Referring to FIG. 18B, when an event where the user's intention should be reflected occurs during photographing, the electronic device 100 may generate a notification 1840b for indicating the same to the user. As an example, the electronic device 100 may output a voice saying "A person is in front. Would you like to keep shooting?"

The electronic device 100 may provide a user interface to which the user may respond to the notification. For example, when the user grips the electronic device 100 in the vertical direction 1820b, the electronic device 100 may divide the screen 1800b up and down. The electronic device 100 may display a first option (e.g., No) 1830b1 in the first division area 1810b1, and may display a second option (e.g., Yes) 1830b2 in the second division area 1810b2.

The electronic device 100 may identify the area touched by the user of the first division area 1810b1 or the second division area 1810b2, and may perform an operation according to the option corresponding to the touched area.

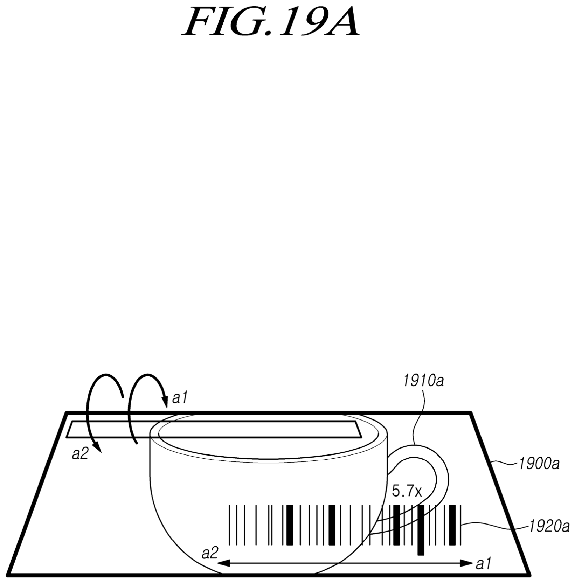

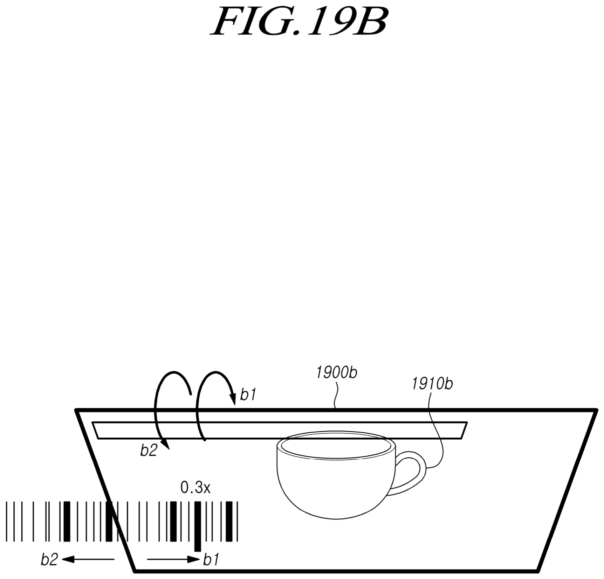

FIGS. 19A and 19B are views illustrating an example of controlling a photographing function by a user in an electronic device (e.g., the electronic device 100 of FIG. 1) according to an embodiment of the disclosure.

Referring to FIG. 19A, the electronic device 100 may recognize that the user makes an attempt (e.g., a tilting motion of shaking the electronic device 100 forward) to control a function (e.g., a zoom function or a brightness adjustment function) related to photographing during photographing. When the user's attempt is recognized, the electronic device 100 may display an indicator 1920a regarding a function to be controlled by the user in relation to photographing on the screen 1900a including the target object 1910a. The electronic device 100 may adjust the setting value of the corresponding function in response to the movement of the user. For example, when the user tilts the electronic device 100 in the direction a1, the setting point in the indicator 1920a indicating the setting of the corresponding function may be moved in the direction a1 (e.g., zoom-in). For example, when the user tilts the electronic device 100 in the direction a2, the setting point in indicator 1920a indicating the setting of the corresponding function may be moved in the direction a2 (e.g., zoom out).

Referring to FIG. 19B, the electronic device 100 may recognize that the user makes an attempt (e.g., a tilting motion of shaking the electronic device 100 back) to control a function (e.g., a zoom function or a brightness adjustment function) related to photographing during photographing. When the user's attempt is recognized, the electronic device 100 may display an indicator 1920b regarding a function to be controlled by the user in relation to photographing on the screen 1900b including the target object 1910b. The electronic device 100 may adjust the setting value of the corresponding function in response to the movement of the user. For example, when the user tilts the electronic device 100 in the direction b1, the setting point in indicator 1920b indicating the setting of the corresponding function may be moved in the direction b1 (e.g., the illuminance increases). For example, when the user tilts the electronic device 100 in the direction b2, the setting point in the indicator 1920b indicating the setting of the corresponding function may be moved in the direction b2 (e.g., illuminance decreases).

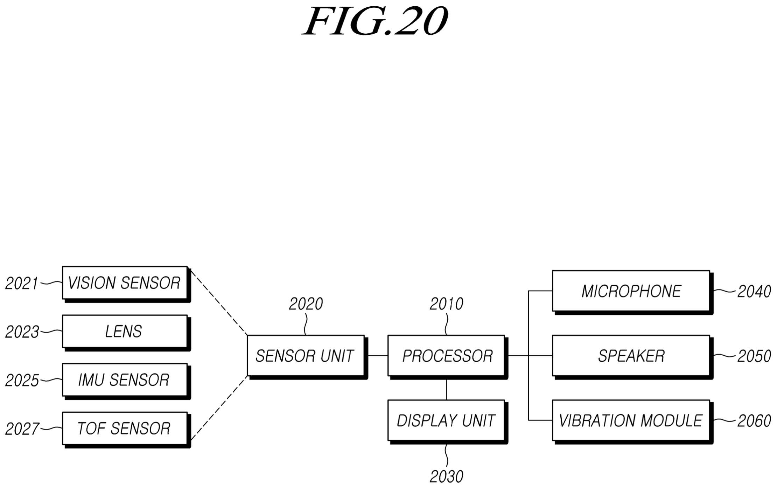

FIG. 20 is a block diagram illustrating an example of an electronic device (e.g., the electronic device 100 of FIG. 1) according to an embodiment of the disclosure.

Referring to FIG. 20, the electronic device 100 may include a processor 2010, a sensor 2020, a display 2030, a microphone 2040, a speaker 2050, or a vibration module 2060. The sensor 2020 may include at least one sensor. As an example, the sensor 2020 may include a vision sensor 2021, a lens, an IMU sensor 2025, or a TOF sensor 2027.

The sensor unit 2020 may detect an operational state (e.g., power or temperature) of the electronic device 100 or an environmental state (e.g., the user's state) outside the electronic device 100, and generate an electrical signal or data value corresponding to the detected state. The sensor 2020 may include one or more of, e.g., a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor. The components may be the same as components described in reference to Fig. 1. Redundant descriptions are omitted.

The display 2030 may visually provide information to the outside (e.g., the user) of the electronic device 101. The display 2030 may include, for example, a display, a hologram device, or a projector and control circuitry to control a corresponding one of the display, hologram device, and projector. The display 2030 may include a touch sensor configured to sense a touch, or a pressure sensor configured to measure the intensity of the force generated by the touch.

The input module included in the electronic device 100 may receive a command or data to be used by a component (e.g., the processor 2010) of the electronic device 100 from the outside (e.g., the user) of the electronic device 100. The input module may include one or more of, e.g., a microphone 2040, a mouse, a keyboard, a key (e.g., a button), a digital pen (e.g., a stylus pen), or the like.

The sound output module included in the electronic device 100 may output a sound signal to the outside of the electronic device 100. The sound output module may include, e.g., a speaker 2050 or a receiver. The speaker 2050 may be used for general purposes such as multimedia playback or recording playback. The receiver may be used for receiving incoming calls. The receiver may be implemented separately from or as a part of the speaker 2050.

The electronic device 100 may include a haptic module. The haptic module may convert an electrical signal into a mechanical stimulus (e.g., vibration or movement) or an electrical stimulus that the user may perceive through tactile or kinesthetic sensations. The haptic module may be, e.g., a vibration module 2060 including a motor, a piezoelectric element, or an electric stimulator.

According to an embodiment, a photographing method of the electronic device 100 may include recognizing (310), as a target object, an object indicated by a hand gesture among at least one object included in a first preview image and displaying (320, 330) a photographing screen including the target object photographed based on a viewing angle.

As an example, the method may further include outputting (323) an identification alarm corresponding to the placement of the target object in the second preview image based on the viewing angle. The identification alarm may be changed according to a movement of the viewing angle.

As an example, the method may include outputting (FIG. 10 or FIG. 12A) a warning alarm in response to the target object not being included in the second preview image.

As an example, the method may include alternately applying recognition setting or recognition release of the target object in response to an event of selecting the second preview image (see FIGS. 5A to 5G).

As an example, the method may include changing (323) the identification alarm in response to the placement of the target object in the preview image reflecting the movement of the viewing angle corresponding to the identification alarm.

As an example, recognizing 310 as the target object may include recognizing (FIG. 4A) the object touched by the movement of the hand as the target object.

As an example, recognizing 310 the target object may include recognizing (FIG. 4B, 7A, or 7B) an object positioned in a vector direction indicated by the hand of the user in the preview image as the target object.

As an example, recognizing 310 the target object may include indicating information about a candidate target object based on the position touched by the hand of the user on the display on which the preview image is displayed, and recognizing (FIG. 4C) the candidate target object as the target object based on an interaction with the user.

As an example, the method may further include identifying (FIG. 11A) a zoom-in request for a specific portion in response to the specific portion of the target object being indicated based on an interaction with the user.

As an example, the method may further include storing 331 a result of analyzing the intention of the user who photographs the target object, based on the viewing angle, corresponding to the photographing screen.

As an example, the method may include keeping the target object locked even after photographing the target object.

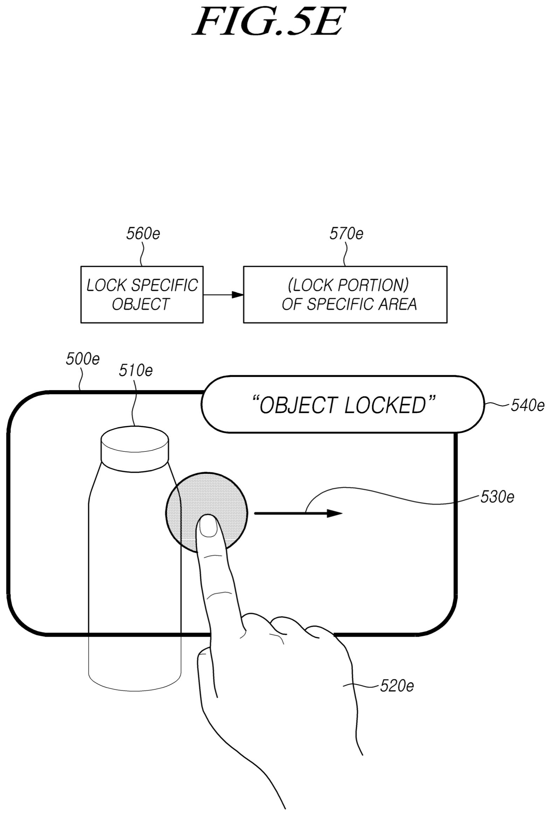

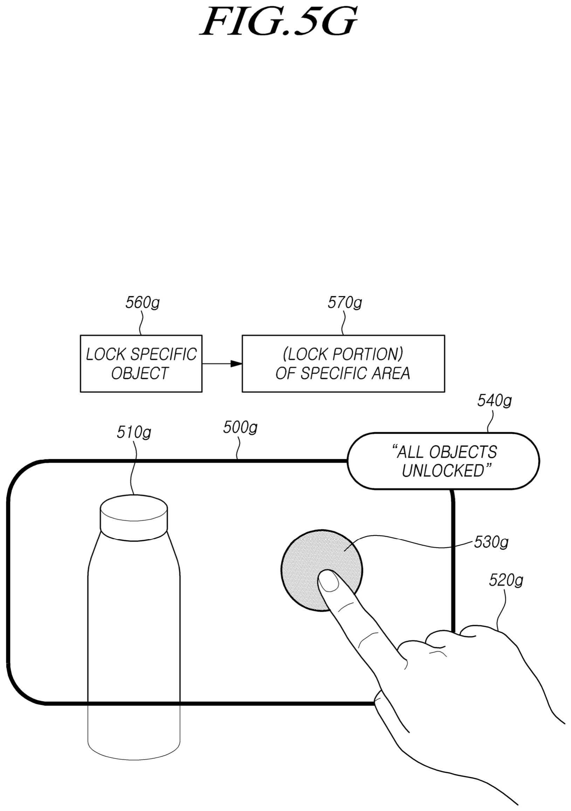

As an example, the method may include processing (FIG. 5E) stepwise recognition setting for the target object in response to pushing the screen from left to right, or stepwise recognition release for the target object in response to pushing the screen from right to left, and processing (FIG. 5G) collective release of the stepwise recognition setting for the target object in response to tapping the screen.

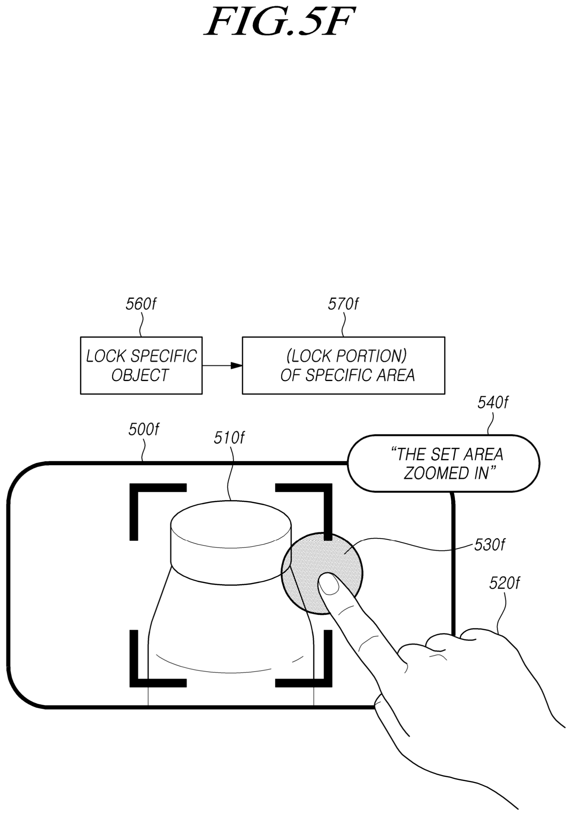

As an example, the method may further include focusing (FIG. 5F) on the indicated portion in response to the specific portion of the target object being indicated according to the user's will after recognizing the target object.

As an example, the method may include feeding (FIG. 12A) back to the user, an entire image of the target object being not included in a preview image for obtaining the photographing screen and feeding (FIG. 12C) back to the user, the entire image of the target object being included in the photographing screen by a change in viewing angle for obtaining the photographing screen in response to the feedback.

As an example, the method may include, when there are a plurality of target objects to be included in the photographing screen, determining (FIG. 13A) a unique identification sound for each of the plurality of target objects, outputting (FIG. 13B) the unique identification sound determined for at least one target object included in the preview image corresponding to the photographing screen among the plurality of target objects, and feeding back to the user a guide message for including the at least one target object in the photographing screen.

As an example, recognizing the target object may include setting (FIG. 6) a plurality of objects included in the preview image as one cluster photographing object based on vision recognition by the hand gesture according to the user's will.

As an example, performing the photographing may include outputting (FIG. 14A or 14B) an identification sound indicating sharpness of the target object included in the photographing screen.

As an example, recognizing the target object may include setting (FIG. 6) a plurality of objects included in the first preview image as one cluster photographing object based on vision recognition by the hand gesture.

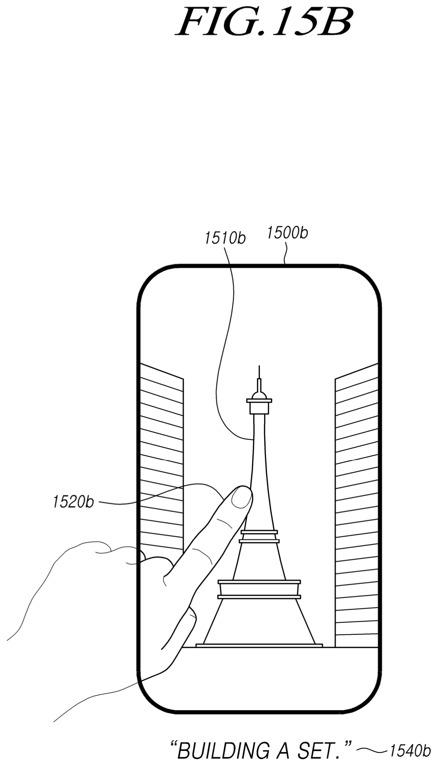

As an example, recognizing the target object may include identifying (FIG. 15A) an object of interest in the first preview image, feeding (FIG. 15B) back the object of interest being identified, and recognizing the object of interest as the target object by the hand gesture.

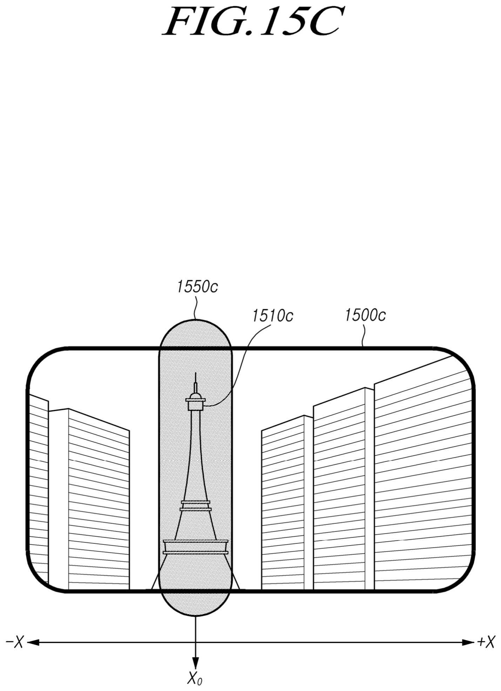

As an example, performing the photographing may include feeding (FIG. 15C) back to the user, a guide message corresponding to a position of the target object on the photographing screen.

As an example, the method may further include feeding (FIG. 16A or FIG. 16B) back using at least one of a sound or a vibration in response to a new object entering the second preview image based on the viewing angle and feeding (FIG. 16C) back using at least one of a sound or a vibration in response to the new object exiting the second preview image.

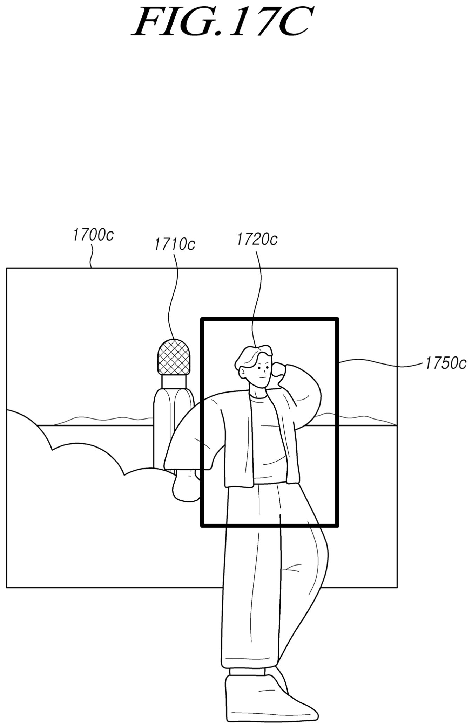

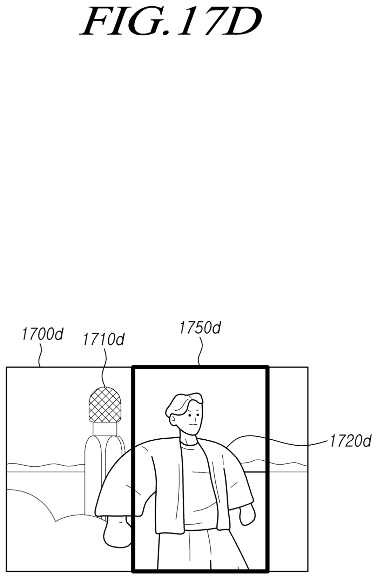

As an example, performing (320, 330) the photographing may include changing the viewing angle or setting a focusing portion (FIG. 17C or FIG. 17D) based on information obtained through an interaction with the new object.

As an example, the method may include outputting (FIG. 18A or FIG. 18B) a selected screen in which at least two options are disposed based on at least one of a hand gripping the electronic device or a screen display form in response to an occurrence of an event requiring selection.

As an example, the method may include controlling (FIG. 19A or 19B) a photographing function in response to a tilting movement in a state in which the user grips the electronic device 100.

As an example, an electronic device 100 may include a sensor 2020, a display 2030, memory 120 including one or more storage media storing instructions, and at least one processor 2010 including a processing circuit. The electronic device 100 may enable the instructions to, by the at least one processor 2010, individually or collectively perform recognizing, as a target object, an object indicated by a hand gesture among at least one object included in a first preview image and displaying a photographing screen including the target object photographed based on a viewing angle.

As an example, the electronic device 100 may enable the instructions to, by the at least one processor 2010, individually or collectively perform outputting an identification alarm corresponding to a placement of the target object in a second preview image based on the viewing angle.

As an example, the identification alarm may be changed according to a movement of the viewing angle.

As an example, the electronic device 100 may enable the instructions to, by the at least one processor 2010, individually or collectively perform outputting a warning alarm in response to the target object not being included in the second preview image.

As an example, the electronic device 100 may enable the instructions to, by the at least one processor 2010, individually or collectively perform alternately applying recognition setting or recognition release of the target object in response to an event of selecting the second preview image.

As an example, the electronic device 100 may enable the instructions to, by the at least one processor 2010, individually or collectively perform changing the identification alarm corresponding to a placement of the target object in a preview image reflecting a movement of the viewing angle corresponding to the identification angle.

As an example, the electronic device 100 may enable the instructions to, by the at least one processor 2010, individually or collectively perform, as recognizing (310) as the target object, recognizing, as the target object, an object touched by the hand gesture.

As an example, the electronic device 100 may enable the instructions to, by the at least one processor 2010, individually or collectively perform recognizing, as the target object, an object positioned in a vector direction indicated by a hand of the user in the preview image.

As an example, the electronic device 100 may enable the instructions to, by the at least one processor 2010, individually or collectively perform indicating information about a candidate target object based on the position touched by the hand of the user on the display on which the preview image is displayed, and recognizing the candidate target object as the target object based on an interaction with the user.

As an example, the electronic device 100 may enable the instructions to, by the at least one processor 2010, individually or collectively perform identifying a zoom-in request for a specific portion of the target object in response to the specific portion being indicated based on an interaction with a user.

As an example, the electronic device 100 may enable the instructions to, by the at least one processor 2010, individually or collectively perform storing a result of analyzing an intention of the user photographing based on the viewing angle, corresponding to the photographing screen.

As an example, the electronic device 100 may enable the instructions to, by the at least one processor 2010, individually or collectively perform keeping the target object locked even after photographing the target object.

As an example, the electronic device 100 may enable the instructions to, by the at least one processor 2010, individually or collectively perform processing stepwise recognition setting for the target object in response to pushing the screen from left to right or stepwise recognition release for the target object in response to pushing the screen from right to left, and processing collective release of the stepwise recognition setting for the target object in response to tapping the screen.

As an example, the electronic device 100 may enable the instructions to, by the at least one processor 2010, individually or collectively perform focusing on a specific portion of the target object in response to the specific portion being indicated by the user's will after recognizing the target object.

As an example, the electronic device 100 may enable the instructions to, by the at least one processor 2010, individually or collectively perform feeding (FIG. 12A) back to the user, an entire image of the target object being not included in a preview image for obtaining the photographing screen and feeding back to the user, the entire image of the target object being included in the photographing screen by a change in viewing angle for obtaining the photographing screen in response to the feedback.

As an example, the electronic device 100 may enable the instructions to, by the at least one processor 2010, individually or collectively perform, when there are a plurality of target objects to be included in the photographing screen, determining (FIG. 13A) a unique identification sound for each of the plurality of target objects, outputting (FIG. 13B) the unique identification sound determined for at least one target object included in the preview image corresponding to the photographing screen among the plurality of target objects, and feeding back to the user a guide message for including the at least one target object in the photographing screen.

As an example, the electronic device 100 may enable the instructions to, by the at least one processor 2010, individually or collectively perform setting a plurality of objects included in the preview image as one cluster photographing object based on vision recognition by the hand gesture according to the user's will

As an example, the electronic device 100 may enable the instructions to, by the at least one processor 2010, individually or collectively perform outputting an identification sound indicating the sharpness of the target object included in the photographing screen.

As an example, the electronic device 100 may enable the instructions to, by the at least one processor 2010, individually or collectively perform setting one of a plurality of objects included in the first preview image as one cluster photographing object based on vision recognition by the hand gesture.

As an example, the electronic device 100 may enable the instructions to, by the at least one processor 2010, individually or collectively perform identifying (FIG. 15A) an object of interest in the first preview image and feeding back the object of interest being identified.

As an example, the electronic device 100 may enable the instructions to, by the at least one processor 2010, individually or collectively perform recognizing the object of interest as the target object by the hand gesture.

As an example, the electronic device 100 may enable the instructions to, by the at least one processor 2010, individually or collectively perform feeding back to the user, a guide message corresponding to the position of the target object on the photographing screen.

As an example, the electronic device 100 may enable the instructions to, by the at least one processor 2010, individually or collectively perform feeding back using at least one of a sound or a vibration in response to a new object entering a second preview image based on the viewing angle.

As an example, the electronic device 100 may enable the instructions to, by the at least one processor 2010, individually or collectively perform feeding back using at least one of a sound or a vibration in response to the new object exiting the second preview image.

As an example, the electronic device 100 may enable the instructions to, by the at least one processor 2010, individually or collectively perform changing the viewing angle or setting a focusing portion based on information obtained through an interaction with the new object.

As an example, the electronic device 100 may enable the instructions to, by the at least one processor 2010, individually or collectively perform outputting a selected screen in which at least two options are disposed based on at least one of a hand gripping the electronic device or a screen display form in response to an occurrence of an event requiring selection.

As an example, the electronic device 100 may enable the instructions to, by the at least one processor 2010, individually or collectively perform controlling a photographing function in response to a tilting movement in a state in which the user grips the electronic device 100.

The terms as used herein are provided merely to describe some embodiments thereof, but are not intended to limit the disclosure. As used herein, the singular forms "a," "an," and "the" are intended to include the plural forms as well, unless the context clearly indicates otherwise. As used herein, each of such phrases as "A or B," "at least one of A and B," "at least one of A or B," "A, B, or C," "at least one of A, B, and C," and "at least one of A, B, or C," may include all possible combinations of one or more of the items enumerated together in a corresponding one of the phrases. As used herein, the term 'and/or' should be understood as encompassing any and all possible combinations by one or more of the enumerated items. As used herein, the terms "include," "have," "comprise" are used merely to designate the presence of the feature, component, part, or a combination thereof described herein, but use of the term does not exclude the likelihood of presence or adding one or more other features, components, parts, or combinations thereof. As used herein, the terms "first" and "second" may modify various components regardless of importance and/or order and are used to distinguish a component from another without limiting the components.

As used herein, the terms "configured to" may be interchangeably used with the terms "suitable for," "having the capacity to," "designed to," "adapted to," "made to," or "capable of" depending on circumstances. The term "configured to" does not essentially mean "specifically designed in hardware to." Rather, the term "configured to" may mean that a device can perform an operation together with another device or parts. For example, a 'device configured (or set) to perform A, B, and C' may be a dedicated device to perform the corresponding operation or may mean a general-purpose device capable of various operations including the corresponding operation. Additionally, as used herein, 'a device that is configured to perform A, B, and C,' should be interpreted as both a device which directly performs A, B, and C, and a device which indirectly performs A, B, and C through a different device.

The terms "upper side", "lower side", and "front and rear directions" used in the disclosure are defined with respect to the drawings, and the shape and position of each component are not limited by these terms.

The above-described embodiments are merely specific examples to describe technical content according to the embodiments of the disclosure and help the understanding of the embodiments of the disclosure, not intended to limit the scope of the embodiments of the disclosure. Accordingly, the scope of various embodiments of the disclosure should be interpreted as encompassing all modifications or variations derived based on the technical spirit of various embodiments of the disclosure in addition to the embodiments disclosed herein.

## Claims

1. A method for photographing by an electronic device (100) , the method comprising:
recognizing, as a target object, an object corresponding to a hand gesture among at least one object included in a first preview image (310); and
displaying a photographing screen including the target object photographed based on a first viewing angle (320, 330).

2. The method of claim 1, further comprising:
outputting a first notification based on a position of the target object in a second preview image based on the first viewing angle (323);
outputting a second notification based on the target object not being included in the second preview image (FIG. 10 or FIG. 12A); and
alternatively performing locking and unlocking of the target object based on a selection in the second preview image (FIGS. 5A to FIGS. 5G),
wherein the first notification is changed according to a movement of the first viewing angle.

3. The method of claim 1, wherein the recognizing, as the target object, the object corresponding to the hand gesture (310) comprises:
recognizing the target object based on at least one of a direction corresponding to the hand gesture, and a touch by the hand gesture (FIG. 4A).

4. The method of claim 1, further comprising:
obtaining a zoom-in request for a portion of the target object in based on the portion corresponding with an interaction of a user (FIG.11A); and
storing a result of analyzing an intention of the user photographing the target object based on the first viewing angle, corresponding to the photographing screen (331),
wherein the target object is locked after photographing the target object.

5. The method of claim 1, further comprising:
processing a stepwise recognition setting for the target object based on an interaction with a user; and
processing a release of the stepwise recognition setting for the target object based on a second interaction with the user (FIG.5E).

6. The method of claim 1, wherein the recognizing, as the target object, the object corresponding to the hand gesture comprises:
identifying an object of interest in the first preview image (FIG.15A);
outputting the object of interest that is identified (FIG.15B); and
recognizing the object of interest as the target object based on the hand gesture (FIG.15B).

7. The method of claim 1, further comprising:
outputting at least one of a sound and a vibration based on a second object entering a second preview image based on the first viewing angle (FIG.16A or FIG.16B); and
outputting at least one of a sound and a vibration based on the second object exiting the second preview image (FIG.16C).

8. The method of claim 1, further comprising:
outputting a selection screen in which at least two options are provided based on at least one of an orientation of the electronic device and a screen display form based on an occurrence of an event requiring selection (FIG. 18A or FIG. 18B).

9. An electronic device (100) comprising:
at least one sensor (2020);
a display (2030);
a memory (120) comprising one or more storage media storing instructions; and
at least one processor (2010) comprising one or more a processing circuits, wherein, by executing the instructions, the at least one processor (2010) is configured to:
recognize, as a target object, an object corresponding to a hand gesture among at least one object included in a first preview image; and
display a photographing screen comprising the target object photographed based on a first viewing angle.

10. The electronic device (100) of claim 9, wherein, by executing the instructions, the at least one processor (2010) is further configured to:
output a first notification based on a position of the target object in a second preview image based on the first viewing angle;
output a second notification based on the target object not being included in the second preview image; and
alternatively locking and unlocking the target object based on an event of selecting the second preview image,
wherein the first notification is changed according to a movement of the first viewing angle.

11. The electronic device (100) of claim 9, wherein, by executing the instructions, the at least one processor (2010) is further configured to:
recognize the target object based on at least one of a direction corresponding to the hand gesture and a touch by the hand gesture.

12. The electronic device (100) of claim 9, wherein, by executing the instructions, the at least one processor (2010) is further configured to:
obtain a zoom-in request for a portion of the target object in based on the portion corresponding to an interaction with a user;
storing a result of analyzing an intention of the user based on the predetermined viewing angle, corresponding to the photographing screen, and
wherein the target object is locked after photographing the target object.

13. The electronic device (100) of claim 9, wherein, by executing the instructions, the at least one processor (2010) is further configured to:
process a stepwise recognition setting for the target object based on an interaction with a user; and
process collective release of the stepwise recognition setting for the target object based on a second interaction with the user.

14. The electronic device (100) of claim 9, wherein, by executing the instructions, the at least one processor (2010) is further configured to:
set a plurality of objects among the at least one object included in the first preview image as the target object based on the hand gesture;
identify an object of interest in the first preview image;
output the object of interest that is identified; and
recognize the object of interest as the target object based on the hand gesture.

15. The electronic device (100) of claim 9, wherein, by executing the instructions, the at least one processor (2010) is further configured to:
output at least one of a sound and a vibration based on a second object entering a second preview image based on the first viewing angle; and
output at least one of a sound and a vibration based on the second object exiting the second preview image.
